(19) Europäisches Patentamt

European Patent Office

Office européen des brevets

(11) Veröffentlichungsnummer: **0 437 669 B1**

(12) **EUROPÄISCHE PATENTSCHRIFT**

(45) Veröffentlichungstag der Patentschrift: **19.01.94**

(51) Int. Cl.5: **H02P 5/40**

(21) Anmeldenummer: **90111550.1**

(22) Anmeldetag: **19.06.90**

(54) **Verfahren und Schaltungsanordnung zur direkten Regelung von Ausgangsströmen eines Wechselrichters, der eine vorbestimmte Anzahl von Drehfeldmaschinen speist.**

(30) Priorität: **18.01.90 EP 90101021**

(43) Veröffentlichungstag der Anmeldung:
**24.07.91 Patentblatt 91/30**

(45) Bekanntmachung des Hinweises auf die Patenterteilung:
**19.01.94 Patentblatt 94/03**

(84) Benannte Vertragsstaaten:
**AT CH DE FR GB IT LI SE**

(56) Entgegenhaltungen:
**EP-A- 0 335 180**
**DE-A- 3 144 174**
**DE-A- 3 504 623**
**DE-C- 3 046 392**

**REGELUNGSTECHNISCHE PRAXIS vol. 24, no. 11, 1983, DE Seiten 472 - 477; G. PFAFF ET AL: "DIREKTE STROMREGELUNG BEI DREH-STROMANTRIEBEN MIT PULSWECHSELRICH-TER"**

**SIEMENS, BEREICH ENERGIE UND AUTOMA-TISIERUNGSTECHNIK, BEST.NR. A 19100-E319-A 365 DE Seiten 34 - 38; "Dreh-zahlveraenderbare Antriebe in der Praxis"**

(73) Patentinhaber: **SIEMENS AKTIENGESELL-SCHAFT**
**Wittelsbacherplatz 2**
**D-80333 München(DE)**

(72) Erfinder: **Barthel, Günther, Dipl.-Ing.**
**Eggartenstrasse 1**
**D-8551 Röttenbach(DE)**
Erfinder: **Link, Ulrich, Dr.-Ing.**
**Tulpenweg 8**
**W-8523 Baiersdorf(DE)**
Erfinder: **Neis, Erwin, Dipl.-Ing.**
**Hartmannstrasse 128**
**D-8520 Erlangen(DE)**

**Beschreibung**

Die Erfindung bezieht sich auf ein Verfahren und eine Schaltungsanordnung zur direkten Regelung von Ausgangsströmen eines Wechselrichters, der eine bzw. mehrere Drehfeldmaschinen ohne Drehzahlistwertgeber speist, mittels einer unterlagerten Stromregelung, der ein Strom-Führungsgrößensystem zugeführt ist.

Aus "Drehzahlveränderbare Antriebe in der Praxis", Seiten 34 bis 38, Siemens, Bereich Energie- und Automatisierungstechnik, Bestell-Nr. A 19100-E319-A365, ist ein Pulsumrichter bekannt, der ausgangsseitig ein Drehstromsystem veränderbarer Spannung und Frequenz für eine vorbestimmte Anzahl von Drehfeldmaschinen erzeugt. Der Pulsumrichter besteht aus einem ungesteuerten Netzgleichrichter, einem Gleichspannungszwischenkreis und einem maschinenseitigen Wechselrichter. Der netzseitige Stromrichter erzeugt aus der Netzspannung eine konstante Gleichspannung, die im Zwischenkreis durch Kondensatoren geglättet wird. Der maschinenseitige Stromrichter formt aus der konstanten Gleichspannung ein Drehspannungssystem mit einstellbarer Frequenz und Spannung. Als abschaltbare Ventile des Wechselrichters werden Transistoren oder Gate Turn-Off-Thyristoren (GTO-Thyristoren) verwendet. Die Pulsmuster für die Ansteuerung des Wechselrichters werden im Mikroprozessor-Steuersatz erzeugt. Hierzu sind Pulsmuster ausgewählt, die im gesamten Stellbereich des Umrichters einen optimalen Betrieb mit nahezu sinusförmigen Motorströmen und minimalen Gesamtverlusten gewährleisten. Die Steuerung und Regelung des Pulsumrichters ist voll digitalisiert. Alle Funktionen einschließlich Steuersatz, Bedienkomfort und umfangreiche Schutzfunktionen werden über 16-Bit-Mikroprozessoren verarbeitet. Als Regelung ist eine Vektorregelung vorgesehen, mit der eine hohe Regeldynamik erzielt wird. Bei der Vektorregelung werden aus den zur Verfügung stehenden Istwerten Motorstrom und Motorspannung der Magnetisierungsstrom und der drehmomentbildende Wirkstrom bestimmt. Diese Stromkomponenten des Stromvektors werden mit den Sollwerten verglichen und ausgeregelt. Dadurch können vorgegebene Momentensollwerte exakt eingehalten werden. Bis zu einem Drehzahlstellbereich von 1 : 10 wird kein Drehzahlistwertgeber benötigt.

Bedingt durch unvermeidliche Schalt- und Verzögerungszeiten der abschaltbaren Ventile des Wechselrichters und der Ansteuerschaltung, deren Dauer variabel und im Einzelfall nicht exakt bekannt ist (Abhängigkeit beispielsweise von Parameterstreuung der Bauelemente, Augenblicksstrom, Temperatur) unterscheidet sich die Umrichterausgangsspannung von den Vorgaben des Spannungssteuersatzes. Die hierdurch bedingten fehlerhaften Spannungs-Zeit-Flächen verursachen besonders bei geringen Umrichter-Ausgangsfrequenzen Harmonische niedriger Ordnung und Gleichanteile in der Ausgangsspannung. Diese führen zu einem nicht sinusförmigen Verlauf der Ausgangsströme, zu zusätzlichen Verlusten im Motor und zu nicht sehr guten Rundlaufeigenschaften bei geringen Umrichter-Ausgangsfrequenzen.

Deutliche Verbesserung im Verhalten eines Antriebs sind möglich, wenn der Umrichter anstelle eines gesteuerten Spannungssystems an seinem Ausgang ein geregeltes Drehstromsystem variabler Frequenz und Amplitude zur Verfügung stellt. Das nicht ideale Schaltverhalten der Leistungshalbleiter sowie im Signalfluß auftretende Laufzeiten werden durch die Regelung erfaßt und ausgeregelt.

Aus der DE 30 45 392 C2 ist ein Verfahren zur Steuerung von dreiphasigen Pulswechselrichtern bekannt, bei dem ein dreiphasiges, sinusförmiges Strom-Führungsgrößensystem vorgegeben wird. Die Strangströme einer dem Pulswechselrichter nachgeschalteten Drehfeldmaschine mit nicht angeschlossenem Sternpunkt werden gemessen und mit den Führungsgrößen verglichen. In Abhängigkeit der Regelabweichung werden die Phasen des Wechselrichters mittels hysteresebehafteten Zweipunktreglern geschaltet.

Bei Gruppenantrieben, wobei mehrere Motoren, deren Anzahl auch während des Betriebes verändert werden kann, elektrisch parallel geschaltet sind, kann eine feldorientierte Regelung nicht eingesetzt werden. Dies resultiert aus folgenden Tatsachen:

Bei den verschiedenen Motoren des Gruppenantriebs können die Motoren unterschiedlich belastet werden, wodurch die Spannungsabfälle an den Wicklungswiderständen und an den Streuinduktivitäten unterschiedlich sind, die jeweils eine andere Phasenlage des Flusses zur gemeinsamen Wechselrichter-Ausgangsspannung haben. Wenn diese Motoren ohne eine Lageerfassung ausgestattet sind, kann die Lage des Flusses nicht ermittelt werden. Außerdem kennt man die Anzahl der Motoren des Gruppenantriebs nicht, da die Anzahl sich während des Betriebes ändert, wodurch auch der Sollwert für die von der Anzahl und der Art der vorhandenen Motoren abhängige flußbildende Stromkomponente nicht bekannt ist.

Aus "Drehzahlveränderbare Antriebe in der Praxis" ist bekannt, daß bei Gruppenantrieben als Regelvariante eine Frequenzsteuerung mit Vorgabe der Spannung über eine U/f-Kennlinie mit Strombegrenzungsregler vorgesehen ist. Bei Einzelantrieben ist als Regelvariante eine Vektorregelung als Drehzahlregelung ohne Drehzahlistwertgeber aber mit Strom- und Momentenbegrenzung vorgesehen.

Der Erfindung liegt nun die Aufgabe zugrunde, ein Verfahren und eine Schaltungsanordnung zur direkten Regelung von Wechselrichter-Ausgangsströmen mittels einer unterlagerten Stromregelung anzugeben, wobei dieser Wechselrichter eine oder mehrere Drehstrommaschinen ohne Drehzahlistwertgeber speist.

Diese Aufgabe wird erfindungsgemäß gelöst mit den kennzeichnenden Merkmalen des Anspruchs 1. Basis der Regelung sind die über die Wechselrichter-Ausgangsströme und die Schaltzustände der Ventile des Wechselrichters berechneten Istwerte der dem Motor zugeführten Wirk- und Blindströme. Aus diesen werden über eine den Wicklungswiderstand der Wicklung und die Streuung berücksichtigende $R_S/X_\sigma$-Transformation die flußbildende und die drehmomentbildende Stromkomponente des Motorstroms ermittelt. Der Sollwert für die flußbildende Komponente wird über eine Kennlinie aus der Umrichter-Ausgangsfrequenz gewonnen. Der Sollwert für die drehmomentbildene Stromkomponente steht als Ausgangssignal eines Drehzahlreglers zur Verfügung, wobei der Drehzahlistwert nachgebildet ist. Aus den gebildeten Führungswerten für die beiden Stromkomponenten wird mittels einer Koordinatenwandlung die Amplitude und der Winkel des Strom-Führungsvektors ermittelt.

Durch eine schnelle, unterlagerte Stromregelung wird sichergestellt, daß die Umrichter-Ausgangsströme bzw. die Strangströme der umrichtergespeisten Drehfeldmaschine jederzeit den von der übergeordneten feldorientierten Regelung vorgegebenen Führungswerten entsprechen. Dies gilt auch für sehr niedrige Ausgangsfrequenzen, so daß selbst bei geringen Drehzahlen ein sehr gutes Rundlaufverhalten erzielt wird.

Außerdem wird die Aufgabe erfindungsgemäß gelöst mit den kennzeichnenden Merkmalen des Anspruchs 2. Bei dieser Regelung für Gruppenantriebe werden aus den Istwerten der den Drehfeldmaschinen zugeführten Wirk- und Blindleistungen, die aus den Wechselrichter-Ausgangsströmen und den Schaltzuständen der Ventile des Wechselrichters berechnet werden, mittels eines Strombelags eines ständerorientierten Ständerstromes ein Grundschwingungs-Effektivistwert der Wechselrichter-Ausgangsspannung berechnet, der mit einem Sollwert der Wechselrichter-Ausgangsspannung verglichen wird und in Abhängigkeit des entstehenden Differenzwertes einen Führungswert der flußbildenden Stromkomponente bildet. Der Führungswert der drehmomentbildenden Stromkomponente wird wie bei der Regelung von Einzelantrieben erzeugt. Gegenüber der Regelung von Einzelantrieben wird bei der Regelung von Gruppenantrieben für die Erzeugung des Führungswertes der feldorientierten Stromkomponente nicht ein Soll- und Istwert der flußbildenden Stromkomponente miteinander verglichen, sondern ein in Abhängigkeit der Ständerfrequenz gebildeter Sollwert der Wechselrichter-Ausgangsspannung mit einem aus den den Drehfeldmaschinen zugeführten Wirk- und Blindleistungen gebildeter Grundschwingungs-Effektivistwert der Wechselrichter-Ausgangsspannung. Durch dieses Verfahren wird erreicht, daß eine Orientierung des Flusses der einzelnen Motoren des Gruppenantriebes erreicht wird. Die Qualität dieser Orientierung ist besonders dann groß, wenn die Belastungen der einzelnen Motoren annähernd gleich sind. Außerdem wird durch die Berechnung des Grundschwingungs-Effektivistwertes der Wechselrichter-Ausgangsspannung erkannt, ob einzelne Motoren während des Betriebes zu- oder weggeschaltet werden, wodurch dementsprechend der Führungswert der flußorientierten Stromkomponente abgeändert wird.

Bei einem vorteilhaften Verfahren wird zur Ermittlung des Führungswertes der flußbildenden Stromkomponente der Sollwert der flußbildenden Stromkomponente gleich dem Führungswert der drehmomentbildenden Stromkomponente gesetzt. Dabei ist darauf zu achten, daß eine minimale Magnetisierung bzw. eine maximale Magnetisierung (beispielsweise Nennmagnetisierung) nie unterschritten bzw. überschritten werden. Für besonders kleine bzw. besonders große Belastungen sind Korrekturen über eine Kennlinie möglich. Dadurch wird der Motor entsprechend einer Last magnetisiert, wodurch der dem Motor zugeführte Wirk- und Blindstrom gleich groß sind. D.h., daß der Motor bei Teillast mit einem Phasenwinkel von etwa 45° betrieben wird, wodurch der Teillastwirkungsgrad von Wechselrichter und Motor auf einen höchstmöglichen Wert angehoben wird. Dadurch werden der Wechselrichter und der Motor mit geringstmöglichen Verlusten betrieben. Diese lastadaptive Magnetisierung bietet den Vorteil, daß die Möglichkeit zum Betrieb mit verbessertem Teillastwirkungsgrad nicht an eine bestimmte Drehzahl-Drehmoment-Charakteristik der Arbeitsmaschine gebunden ist, sondern in jedem beliebigen Antrieb eingesetzt werden kann.

Der Aufbau einer erfindungsgemäßen Schaltungsanordnung zur Durchführung des Verfahrens zur direkten Regelung der Ausgangsströme eines Wechselrichters, der eine Drehfeldmaschine ohne Drehzahlistwertgeber speist, ist dem Anspruch 10 zu entnehmen. Der erfindungsgemäße Strom-Führungsgrößenbildner erzeugt aus den Istwerten der Wechselrichter-Ausgangsströme, den Schaltzuständen der Stromrichterventile des Wechselrichters und einem Drehzahlsollwert ein dreiphasiges, sinusförmiges Strom-Führungsgrößensystem, das einer unterlagerten Stromregelung zugeführt wird. Mittels des Istwertrechners des Strom-Führungsgrößenbildners wird zunächst aus den Wechselrichter-Ausgangsströmen (Strangströme der Drehfeldmaschine), den Schaltzuständen der Stromrichterventile des Wechselrichters und der ermittelten Stromamplitude der Strom-Führungsgröße die Istwerte der der Drehfeldmaschine zugeführten Wirk- und Blindströme berechnet, die dann in eine drehmoment- und eine flußbildende Stromkomponente transformiert werden. Mittels dieser feldorientierten Größen werden der drehmoment- und der flußbildende Strom-Führungsgrößenwert getrennt voneinander erzeugt. Außerdem wird mittels eines gebildeten Beschleunigungssignals der Drehzahlistwert bestimmt, der zur Ermittlung des Führungswertes der drehmomentbildenden Stromkomponente benötigt wird. Somit kann mit diesem Strom-Führungsgrößenbildner mittels der feldorientierten Regelung nur aus den Istwerten der Wechselrichter-Ausgangsströme und den Schaltzuständen der Ventile dieses Wechselrichters ein Strom-Führungsgrößensystem für eine unterlagerte Stromregelung erzeugt werden, wodurch eine Drehfeldmaschine ohne eine Drehzahlistwerterfassung einfach geführt werden kann, wobei selbst bei geringen Drehzahlen ein sehr gutes Rundlaufverhalten erzielt wird.

Der Aufbau einer erfindungsgemäßen Schaltungsanordnung zur Durchführung des Verfahrens zur direkten Regelung der Ausgangsströme eines Wechselrichters, der mehrere Drehfeldmaschinen jeweils ohne Drehzahlistwertgeber speist, ist dem Ansruch 11 zu entnehmen. Der erfindungsgemäße Strom-Führungsgrößenbildner erzeugt aus den Istwerten der Wechselrichter-Ausgangsströme, den Schaltzuständen der Stromrichterventile des Wechselrichters und dem Drehzahlsollwert ein dreiphasiges, sinusförmiges Strom-Führungsgrößensystem, das einer unterlagerten Stromregelung zugeführt wird. Mittels des Istwertrechners des Strom-Führungsgrößenbildners wird zunächst aus den Wechselrichter-Ausgangsströmen und den Schaltzuständen der Stromrichterventile des Wechselrichters die Istwerte der den Drehfeldmaschinen zugeführten Wirk- und Blindleistungen berechnet, aus denen dann mittels einer ermittelten Stromamplitude der Strom-Führungsgröße der Grundschwingungs-Effektivistwert der Wechselrichter-Ausgangsspannung berechnet wird. Dieser Grundschwingungs-Effektivistwert wird mit einem Sollwert der Wechselrichter-Ausgangsspannung verglichen, wobei in Abhängigkeit des entstehenden Differenzwertes die Führungsgröße der flußbildenden Stromkomponente gebildet wird. Die drehmomentbildende Stromkomponente wird wie bei der Regelung eines Einzelantriebes erzeugt. Somit kann auch ein Gruppenantrieb, wobei keine Drehzahlistwertgeber verwendet werden, annähernd feldorientiert geregelt werden.

Um das dynamische Verhalten des Antriebs zu verbessern, wird bei der Nachbildung des Drehzahlistwertes mittels eines gebildeten Beschleunigungssignals dieses Beschleunigungssignal zum Drehzahlistwert aufgeschaltet. Außerdem wird zur Bestimmung der Phasenlage des Strom-Führungsgrößenvektors der Lastwinkel differenziert und diese Winkeländerung zur Ständerfrequenz addiert und anschließend integriert. Dadurch wird erreicht, daß bei Belastungsänderung des Antriebs die Phasenlage des Strom-Führungsgrößenvektors sich entsprechend ändert.

Um einen besonders verlustarmen Betrieb von Motor und Wechselrichter zu erreichen, wird im Teillastbereich der Sollwert der flußbildenden Stromkomponente gleich dem Führungswert der drehmomentbildenden Stromkomponente gesetzt. Dadurch wird sichergestellt, daß der Motor bei Teillast mit einem Lastwinkel von 45° betrieben wird. Der Teillastwirkungsgrad von Wechselrichter und Motor wird so auf den höchstmöglichen Wert angehoben. Diese lastadaptive Magnetisierung bietet den Vorteil, daß die Möglichkeit zum Betrieb mit verbessertem Teillastwirkungsgrad nicht an eine bestimmte Drehzahl-Drehmoment-Charakteristik der Arbeitsmaschine gebunden ist, sondern in jedem Antrieb eingesetzt werden kann.

Eine besonders vorteilhafte Ausführungsform des Strom-Führungsgrößenbildners besteht darin, daß dieser Strom-Führungsgrößenbildner ein Mikroprozessor ist. Die Mikroprozessortechnik bietet gegenüber der analogen Technik den Vorteil einer erhöhten Genauigkeit, einer exakten Einstellbarkeit und einer Reproduzierbarkeit von Sollwerten und Regelparametern.

Durch das erfindungsgemäße Verfahren und die Schaltungsanordnung zur Erzeugung eines Strom-Führungsgrößensystems für eine unterlagerte Stromregelung können die Wechselrichter-Ausgangsströme direkt geregelt werden, ohne dabei den Drehzahlistwert des Antriebs (Einzel- oder Gruppenantrieb) erfassen zu müssen. Außerdem kann als Umrichter ein Spannungszwischenkreis- oder ein Stromzwischenkreisumrichter verwendet werden.

Zur weiteren Erläuterung der Erfindung wird auf die Zeichnung Bezug genommen, in der Ausführungsbeispiele der Schaltungsanordnung zur Durchführung des erfindungsgemäßen Verfahrens schematisch dargestellt sind.

Figur 1     zeigt ein erstes Ausführungsbeispiel der erfindungsgemäßen Schaltungsanordnung für einen Einzelantrieb, in

Figur 2     ist ein erstes Ausführungsbeispiel der erfindungsgemäßen Schaltungsanordnung für einen Gruppenantrieb dargestellt, in

Figur 3     ist ein vorteilhaftes Ausführungsbeispiel der erfindungsgemäßen Schaltungsanordnung nach Figur 1 veranschaulicht, in

Figur 4     ist ein weiteres vorteilhaftes Ausführungsbeispiel der Schaltungsanordnung nach Figur 1 dargestellt,

Figur 5     zeigt einen Teil eines vorteilhaften Ausführungsbeispiels der Schaltungsanordnung nach Figur 2, in

Figur 6     ist ein Teil eines besonders vorteilhaften Ausführungsbeispiels der Schaltungsanordnung nach Figur 2 dargestellt und Figur 7 veranschaulicht ein Blockschaltbild der weiteren Transformationseinrichtung der Schaltungsanordnung nach Figur 2.

In den Figuren sind gleiche Gegenstände mit denselben Bezugszeichen versehen.

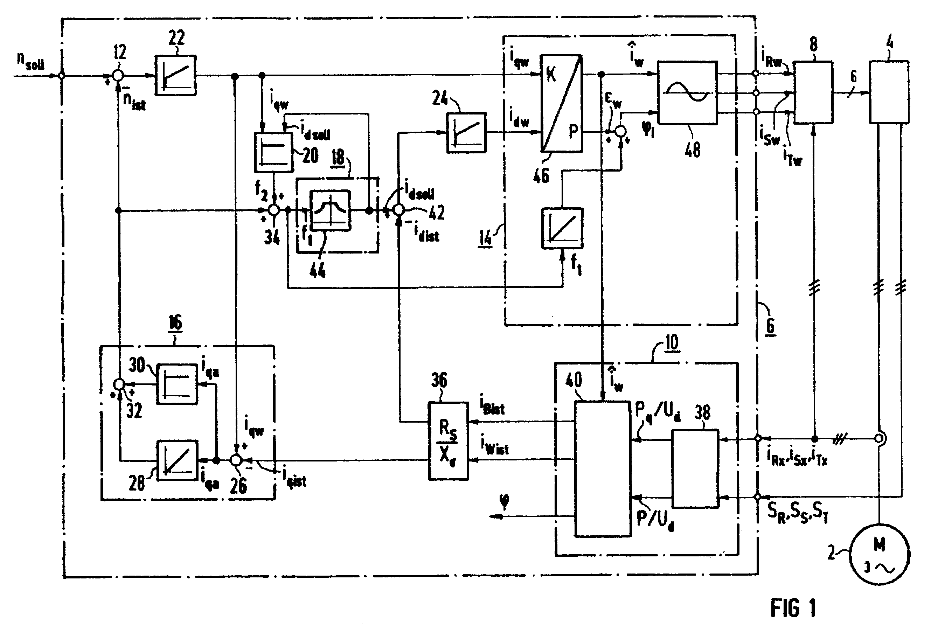

In Figur 1 ist eine Schaltungsanordnung zur direkten Regelung von Wechselrichter-Ausgangströmen $i_{Rx}$, $i_{Sx}$ und $i_{Tx}$ eines Umrichters dargestellt, der eine Drehfeldmaschine 2 speist. Der Übersichtlichkeit halber ist vom Umrichter nur der lastseitige Wechselrichter 4 dargestellt. Als Umrichter kann ein Spannungszwischenkreis-oder ein Stromzwischenkreisumrichter verwendet werden. Der lastseitige Wechselrichter 4 ist mit abschaltbaren Stromrichterventilen aufgebaut. Als abschaltbare Stromrichterventile können Transistoren oder Gate Turn-Off-Thyristoren (GTO-Thyristoren) verwendet werden. Die Schaltzustände dieser Ventile werden durch die Schaltzustandssignale $S_R$, $S_S$ und $S_T$ angezeigt.

Die Regelung besteht aus einem Strom-Führungsgrößenbildner 6 und einer unterlagerten Stromregelung 8. Der Strom-Führungsgrößenbildner 6 erzeugt aus den Wechselrichter-Ausgangströmen $i_{Rx}$, $i_{Sx}$ und $i_{Tx}$ und einem vorgebbaren Drehzahlsollwert $n_{soll}$ mittels der Schaltzustandssignale $S_R$, $S_S$ und $S_T$ beispielsweise ein dreiphasiges, sinusförmiges Strom-Führungsgrößensystem $i_{Rw}$, $i_{Sw}$ und $i_{Tw}$ für die unterlagerte Stromregelung 8. Außerdem werden dieser unterlagerten Stromregelung 8 noch die Istwerte der Wechselrichter-Ausgangströme $i_{Rx}$, $i_{Sx}$ und $i_{Tx}$ zugeführt, wobei mittels eines Vergleiches von Führungswerten $i_{Rw}$, $i_{Sw}$ und $i_{Tw}$ und Istwerten $i_{Rx}$, $i_{Sx}$ und $i_{Tx}$ die Ventile des Wechselrichters 4 angesteuert werden.

Der Strom-Führungsgrößenbildner 6 besteht eingangsseitig aus einem Istwertrechner 10 und einem ersten Vergleicher 12 und ausgangsseitig aus einer Transformationseinrichtung 14. Außerdem enthält dieser Führungsgrößenbildner 6 ein Drehzahlistwertmodell 16, einen flußbildenden Stromkomponenten-Sollwertbildner 18, eine Schlupfkompensation 20, einen Drehzahlregler 22 und einen flußbildenden Stromkomponentenregler 24.

Am positiven Eingang des ersten Vergleichers 12 steht ein vorbestimmter Drehzahlsollwert $n_{soll}$ an und an seinem negativen Eingang steht ein nachgebildeter Drehzahlistwert $n_{ist}$ an, der mittels des Drehzahlistwertmodells 16 gebildet wird. Aus der Drehzahldifferenz am Ausgang des Vergleichers 12 wird mittels des Drehzahlreglers 22 ein Führungswert der drehmomentbildenden Stromkomponente $i_{qw}$ gebildet. Diese drehmomentbildende Stromführungswertkomponente $i_{qw}$ wird einerseits einem positiven Eingang des Drehzahlistwertmodells 16 und der Schlupfkompensation 20 und andererseits einem ersten Eingang der ausgangsseitigen Transformationseinrichtung 14 zugeführt. Am negativen Eingang des Drehzahlistwertmodells 16 steht ein ermittelter Istwert der drehmomentbildenden Stromkomponente $i_{qist}$ an.

Der positive und negative Eingang des Drehzahlistwertmodells 16 gehören einem eingangsseitigen Vergleicher 26, der die Differenz $i_{qa}$ vom Führungswert und vom Istwert der drehmomentbildenden Stromkomponente $i_{qw}$ und $i_{qist}$ bildet. Diese Stromkomponenten $i_{qw}$ und $i_{qist}$ sind äquivalent dem Motormoment und dem Lastmoment. Somit ist die Stromkomponentendifferenz $i_{qa}$ äquivalent zur Drehmomentdifferenz. Diese Drehmomentdifferenz ist gleich einem Beschleunigungsmoment. Der äquivalente Stromkomponentendifferenzwert $i_{qa}$ wird einerseits einem integral wirkenden und einem proportional wirkenden Regler 28 und 30 zugeführt. Die Ausgänge dieser Regler 28 und 30 werden mittels eines Addierers 32 addiert, an dessen Ausgang stationär der nachgebildete Drehzahlistwert $n_{ist}$ steht. Durch die Verwendung des proportional wirkenden Reglers 30 wird das dynamische Verhalten des Antriebs wesentlich verbessert. Dieser Drehzahlistwert $n_{ist}$ wird außerdem einem weiteren Addierer 34 zugeführt, an dessen zweitem Eingang die Schlupffrequenz $f_2$ ansteht. Am Ausgang dieses Addierers 34 erhält man die Ständerfrequenz $f_1$, die der ausgangsseitigen Transformationseinrichtung 14 zugeführt wird.

Der Istwert der drehmomentbildenden Stromkomponente $i_{qist}$ ist eine der beiden feldorientierten Größen, die mittels des eingangsseitigen Istwertrechners 10 und einer nachgeschalteten Transformationseinrichtung 36 aus den Wechselrichter-Ausgangströmen $i_{Rx}$, $i_{Sx}$ und $i_{Tx}$ und den Schaltzustandssignalen $S_R$, $S_S$ und $S_T$ der Wechselrichterventile erzeugt werden.

Der Istwertrechner 10 besteht aus einer Leistungserfassung 38 und einer Istwertrecheneinrichtung 40. Der Aufbau der Leistungserfassung 38 ist in der DE 35 04 623 A1 ausführlich beschrieben. An den Ausgängen dieser Leistungserfassung 38 stehen die auf die Zwischenkreisspannung $U_d$ bezogene Wirk- und Blindleistung $P/U_d$ und $P_q/U_d$ an. Die Istwertrecheneinrichtung 40 berechnet daraus die dem Motor 2 zugeführten Istwerte der Wirk- und Blindströme $i_{Wist}$ und $i_{Bist}$ und den Phasenwinkel $\phi$. Diese Istwerte werden mit folgenden Gleichungen berechnet:

$$\tan \varphi = \frac{P_q/U_d}{P/U_d} = \frac{P_q}{P}$$

$$i_{Wist} = \hat{i}_w \cdot \cos \varphi = \hat{i}_w \frac{1}{\sqrt{1+\tan^2 \varphi}}$$

$$i_{Bist} = \hat{i}_w \cdot \sin \varphi = i_{Wist} \cdot \tan \varphi$$

$$\varphi = \arctan P_q/P$$

Aus den Istwerten der Wirk- und Blindströme $i_{Wist}$ und $i_{Bist}$ werden über eine den Wicklungswiderstand $R_S$ der Ständerwicklung und die Streuung X berücksichtigende Transformation die Istwerte der drehmomentbildenden und der flußbildenden Stromkomponente $i_{qist}$ und $i_{dist}$ des Motorstromes gebildet.

Der Istwert der flußbildenden Stromkomponente $i_{dist}$ wird einem negativen Eingang eines weiteren Vergleichers 42 zugeführt, an dessen positivem Eingang der Sollwert der flußbildenden Stromkomponente $i_{dsoll}$ ansteht. Dieser Sollwert $i_{dsoll}$ wird über eine Kennlinie von der Ausgangsfrequenz (Ständerfrequenz) $f_1$ abgeleitet. Deshalb wird die gebildete Ständerfrequenz $f_1$ einem lastunabhängigen Sollwertbildner 44 des flußbildenden Stromkomponenten-Sollwertbildners 18 zugeführt, an dessen Ausgang dann der Sollwert der flußbildenden Stromkomponente $i_{dsoll}$ ansteht. Dieser Sollwert $i_{dsoll}$ wird außerdem der Schlupfkompensation 20 zugeführt. Aus der Differenz von Sollwert $i_{dsoll}$ und Istwert $i_{dist}$ wird mittels des Stromreglers 24 der Führungswert der flußbildenden Stromkomponente $i_{dw}$ erzeugt.

Aus den feldorientierten Führungsgrößen $i_{qw}$ und $i_{dw}$ und der Ständerfrequenz $f_1$ wird mittels der Transformationseinrichtung 14 zunächst der Betrag $\hat{i}_w$ und der Lastwinkel $\epsilon_w$ gebildet. Den Betrag $\hat{i}_w$ und den Lastwinkel $\epsilon_w$ erhält man mittels eines K/P-Wandlers 46 (kartesisch/polar) aus den feldorientierten Stromkomponenten $i_{qw}$ und $i_{dw}$. Aus diesem Lastwinkel $\epsilon_w$ und dem Integral der Ständerfrequenz $f_1$ erhält man den Stromphasenwinkel $\phi_i$ des Stromvektors $\underline{i}_S$. Aus diesem Stromphasenwinkel $\phi_i$ und dem Betrag $\hat{i}_w$ wird mittels eines Führungsgrößensystembildners 48 beispielsweise ein dreiphasiges, sinusförmiges Führungsgrößensignal $i_{Rw}$, $i_{Sw}$ und $i_{Tw}$ gebildet.

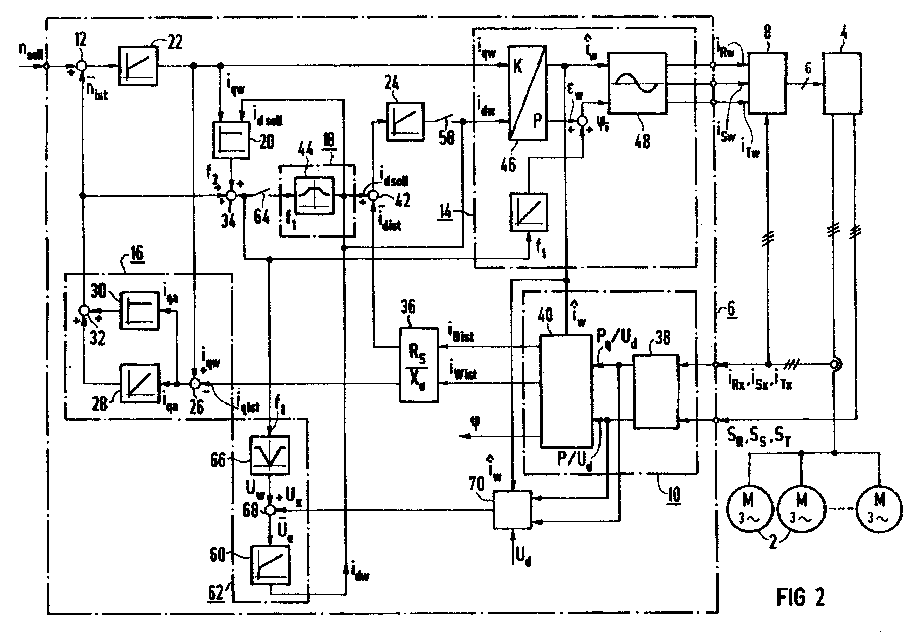

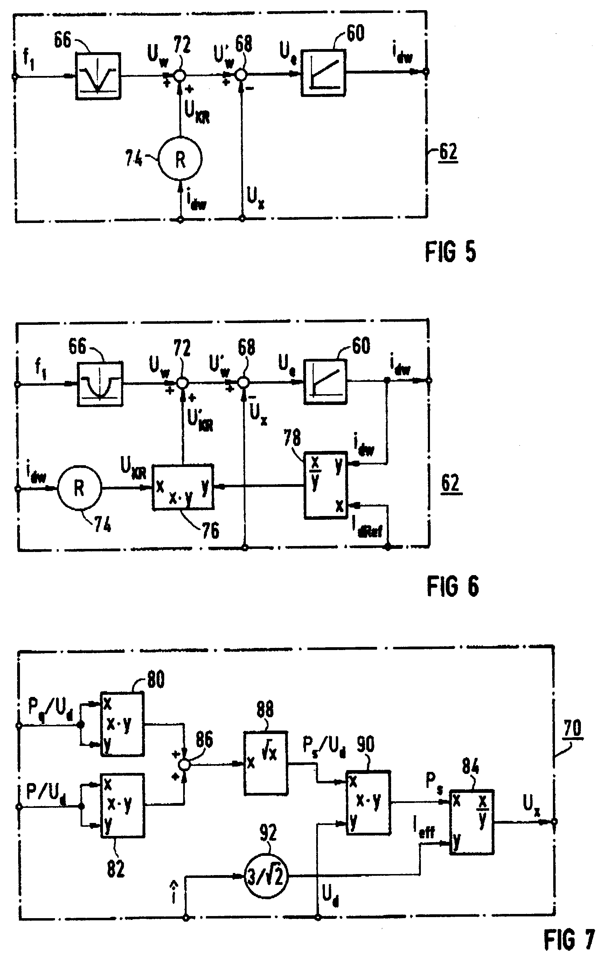

In Figur 2 ist eine Schaltungsanordnung zur direkten Regelung von Wechselrichter-Ausgangsströmen $i_{Rx}$, $i_{Sx}$, $i_{Tx}$ eines Wechselrichters 4 dargestellt, der mehrere Drehfeldmaschinen 2 speist. Gegenüber der Schaltungsanordnung nach Figur 1 ist den Ausgang des flußbildenden Stromkomponentenreglers 24 ein Schalter 58 nachgeschaltet, dessen Ausgang einerseits mit einem Eingang der ausgangsseitigen Transformationseinrichtung 14 und andererseits mit einem Ausgang eines Spannungsreglers 60 einer Spannungsregeleinrichtung 62 verknüpft ist. Dem Addierer 34 ist ebenfalls ein Schalter 64 nachgeschaltet, dessen Ausgang mit dem Eingang des flußbildenden Stromkomponenten-Sollwertbildners 18 verbunden ist. Der Ausgang des Addierers 34 ist ebenfalls einerseits mit der ausgangsseitigen Transformationseinrichtung 14 und andererseits mit einem Sollwertbildner 66 für die Wechselrichter-Ausgangsspannung $U_w$ elektrisch leitend verbunden. Der Ausgang des Spannungsreglers 60 ist ebenfalls mit einem Eingang der Schlupfkompensation 20 verbunden. Die Schalter 58 und 64 sind wirkungsmäßig miteinander verbunden, d.h.,daß die Schalter 58 und 64 gleichzeitig ein- bzw. ausschalten. Als Schalter 58 und 64 können elektrisch betätigbare Schalter, beispielsweise Transistoren, die mittels eines Impulses, generiert durch die Betätigung einer Taste "Gruppenantrieb" einer Bedienerebene des Umrichters, ausgeschaltet werden. Dem Sollwertbildner 66 ist ein dritter Vergleicher 68 nachgeschaltet, dessen Ausgang mit dem Eingang des nachfolgenden Spannungsreglers 60 und dessen negativer Eingang mit dem Ausgang einer weiteren Transformationseinrichtung 70 verknüpft sind. Dieser Transformationseinrichtung 70, deren Blockschaltbild in der Figur 7 näher dargestellt ist, werden eingangsseitig vom Istwertrechner 10 die ermittelten bezogenen Wirk- und Blindleistungen $P/U_d$ und $P_q/U_d$ und von der ausgangsseitigen Transformationseinrichtung 14 ein Strombelag $\hat{i}_w$ eines ermittelten ständerorientierten Stromvektors $\underline{i}_S$ zugeführt. Außerdem wird der Wert der Zwischenkreisspannung $U_d$ des Umrichters zugeführt, da der Istwertrechner 10 die Wirk- und Blindleistungen auf die Zwischenkreisspannung $U_d$ bezogen errechnet. Am Ausgang dieser Transformationseinrichtung 70 steht der Grundschwingungs-Effektivistwert der Wechselrichter-Ausgangsspannung $U_x$ an, der mit einem Sollwert der Wechselrichter-Ausgangsspannung $U_w$ verglichen wird. Der Sollwert $U_w$ wird in Abhängigkeit der Ständerfrequenz $f_1$ mittels des Sollwertbildners 66 bestimmt. Als Sollwertbildner 66 ist ein Kennliniengeber vorgesehen, der Kennlinien für verschiedene Antriebe (Konstantmomentantrieb, Strömungsmaschinenan-

6

trieb) enthält. Der entstehende Regeldifferenzwert $U_e$ ist dem Spannungsregler 60 zugeführt, an dessen Ausgang ein Führungswert der flußbildenden Stromkomponente $i_{dw}$ ansteht, der der ausgangsseitigen Transformationseinrichtung 14 zugeführt wird. Dieser Führungswert der flußbildenden Stromkomponente $i_{dw}$ wird mittels des Spannungsreglers 60 solange verändert bis der Grundschwingungs-Effektivistwert der Wechselrichter-Ausgangsspannung $U_x$ mit dem Sollwert der Wechselrichter-Ausgangsspannung $U_w$ übereinstimmt.

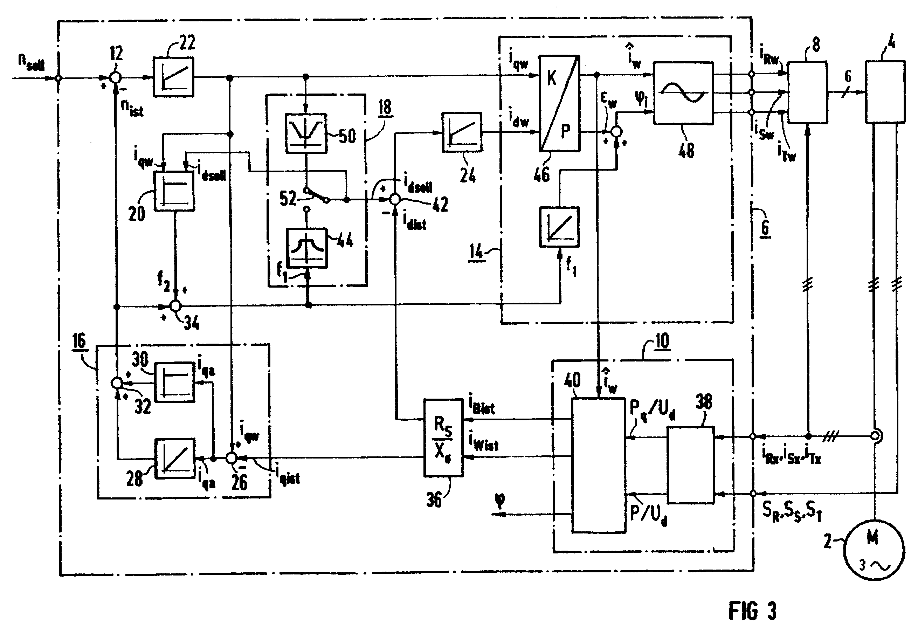

In Figur 3 ist eine vorteilhafte Schaltungsanordnung zur direkten Regelung von Wechselrichter-Ausgangsströmen $i_{Rx}$, $i_{Sx}$ und $i_{Tx}$ dargestellt. Diese Schaltungsanordnung unterscheidet sich von der Schaltungsanordnung nach Figur 1 darin, daß der flußbildende Stromkomponenten-Sollwertbildner 18 zusätzlich einen lastabhängigen Sollwertbildner 50 und einen Umschalter 52 aufweist. Dem lastabhängigen Sollwertbildner 50 wird der vom Drehzahlregler 22 erzeugte Führungswert der drehmomentbildenden Stromkomponente $i_{qw}$ zugeführt. Bei Teillast wird der Sollwert der flußbildenden Stromkomponente $i_{dsoll}$ dem Führungswert der drehmomentbildenden Stromkomponente $i_{qw}$ gleichgesetzt. Dadurch wird sichergestellt, daß der Motor entsprechend der Belastung magnetisiert wird. Umrichter und Motor werden dann mit geringstmöglichem Verlust betrieben, d.h., der Wirk- und der Blindstrom sind dann gleich groß. Da eine minimale bzw. maximale Magnetisierung (beispielsweise Nennmagnetisierung) nie unter- bzw. überschritten werden soll, wird bei besonders kleinen bzw. bei besonders großen Belastungen des Antriebs die Magnetisierung über eine Kennlinie korrigiert. D.h., bei Teillast wird der lastabhängige Sollwertbildner 50 mittels des Umschalters 52 mit dem Vergleicher 42 verbunden, wogegen außerhalb dieses Teillastbereiches der lastunabhängige Sollwertbildner 44 mittels des Umschalters 52 mit dem Vergleicher 42 verbindbar ist. Somit können nicht nur Antriebe mit bekannter und fester Drehzahl-Drehmoment-Charakteristik, sondern beliebige Antriebe mit verringerter Verlustleistung betrieben werden.

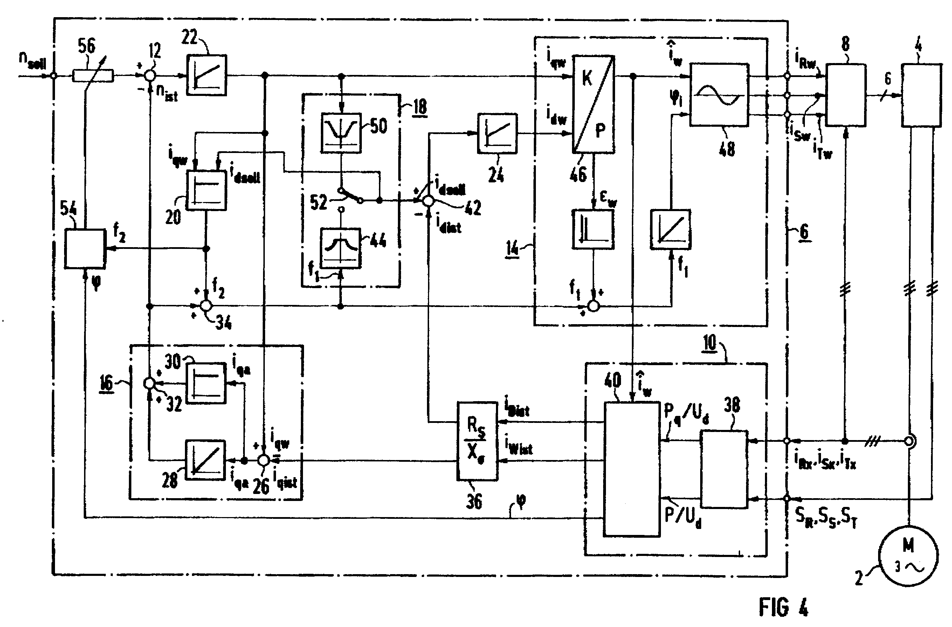

In Figur 4 ist eine weitere vorteilhafte Schaltungsanordnung zur direkten Regelung der Wechselrichter-Ausgangsströme $i_{Rx}$, $i_{Sx}$ und $i_{Tx}$ dargestellt. Diese Schaltungsanordnung unterscheidet sich von der Schaltungsanordnung gemäß Figur 3 darin, daß zusätzlich eine Kippschutzeinrichtung 54 vorhanden ist. Diese Kippschutzeinrichtung 54 ist eingangsseitig einerseits mit dem Istwertrechner 10 und andererseits mit der Schlupfkompensation 20 und ausgangsseitig mit einem Sollwertstellglied 56 verbunden. Die Kippschutzeinrichtung 54 vergleicht einerseits die Schlupffrequenz $f_2$ mit einer vorbestimmten hinterlegten Kippschlupffrequenz $f_{sk}$ oder andererseits eine dem Phasenwinkel $\phi$ entsprechende Frequenz $f_\phi$ mit der vorbestimmten Kippschlupffrequenz $f_{sk}$. Sobald die Schlupffrequenz $f_2$ bzw. die Frequenz $f_\phi$ einen vorbestimmten Wert unterhalb der Kippschlupffrequenz $f_{sk}$ erreicht hat, wird über das Sollwertstellglied 56 direkt auf den Drehzahlsollwert $n_{soll}$ derart eingegriffen, daß bei motorischem Betrieb der Drehzahlsollwert $n_{soll}$ erniedrigt und bei generatorischem Betrieb dieser Sollwert $n_{soll}$ erhöht wird. D.h., um das Kippen eines mit einem Moment belasteten Antriebs zu verhindern, wobei der Wert dieses Momentes beispielsweise 90 % des Wertes des Kippmomentes entsprechen kann, ist es notwendig, den Drehzahlsollwert $n_{soll}$ schnellstmöglich, insbesondere sprunghaft, zu verringern, wodurch sich der Betrag des Schlupfes ebenfalls verringert. Dies wird mittels der Kippschutzeinrichtung 54 und dem Sollwertstellglied 56 erreicht. Bei hohen dynamischen Anforderungen ist die Auswertung des Phasenwinkels , um die Gefahr des Kippens eines belasteten Antriebs zu erkennen, der Vorrang zu geben.

Die Figur 5 zeigt eine vorteilhafte Ausgestaltung der Spannungsregeleinrichtung 62 der Schaltungsanordnung nach Figur 2. Dabei ist dem Sollwertbildner 66 ein Addierer 72 nachgeschaltet, der ausgangsseitig mit dem positiven Eingang des dritten Vergleichers 68 und dessen zweiter Eingang mit dem Ausgang eines Konstantgliedes 74 verknüpft sind. Am Eingang dieses Konstantgliedes 74 steht der Führungswert der flußbildenden Stromkomponente $i_{dw}$ an. Das Konstantglied 74 ist auf einen Wert R eingestellt, der dem Summenwert der Ständerwiderstände der mehreren Drehfeldmaschinen 2 entspricht, wobei die Anzahl der Motoren 2 vorbestimmt sind. Am Ausgang des Konstantgliedes 74 wird ein Korrekturwert $U_{KR} = i_{dw}$ R generiert, der dem Sollwert der Wechselrichter-Ausgangsspannung $U_w$ aufgeschlagen wird. Dadurch werden die Spannungsabfälle an den Motorzuleitungen und an den Wicklungswiderständen der Ständerwicklungen der Drehfeldmaschinen 2 kompensiert.

In Figur 6 ist eine besonders vorteilhafte Ausgestaltung der Spannungsregeleinrichtung 62 der Schaltungsanordnung nach Figur 2 näher dargestellt. Dabei wird davon ausgegangen, daß die Kompensation vom Wechselrichter-Ausgangsstrom oder vom Wirkanteil dieses Stromes abhängig ist. Wenn nun aus der Motorengruppe ein Motor 2 abgeschaltet wird, so würde der Sollwert für die Wechselrichter-Ausgangsspannung $U_w$ reduziert, da der Korrekturwert $U_{KR}$ kleiner wird. Aus diesem Grund ist es zweckmäßiger, anstelle des Korrekturwertes $U_{KR}$ einen neuen Korrekturwert $U'_{KR}$ einzuführen, der eine Gewichtung der ursprünglichen Kompensation mit dem Verhältnis der bei der Inbetriebnahme des Gruppenantriebes angenommenen flußbildenden Stromkomponente $I_{dRef}$, auch flußbildende Referenzstromkomponente genannt, zum aktuellen vom Spannungsregler 60 vorgegebenen Führungswert der flußbildenden Stromkomponente $i_{dw}$ vorzunehmen. Anstelle der flußbildenden Stromkomponente $i_{dw}$ können auch entsprechende Blindströme verwendet werden. Realisiert wird diese Gewichtung der ursprünglichen Kompensation dadurch, daß dem Konstantglied 74 ein Multiplizierer 76 nachgeschaltet ist. Der Ausgang dieses Multiplizierers 76 ist mit dem zweiten Eingang des Addierers 72 verbunden. Dem zweiten Eingang des Multiplizierers 76 ist ein Dividierer 78 vorgeschaltet, an dessen ersten Eingang die flußbildende Referenzstromkomponente $I_{dRef}$ ansteht und dessen zweiter Eingang mit dem Ausgang des Spannungsreglers 60 verknüpft ist.

Die Figur 7 veranschaulicht ein Blockschaltbild der weiteren Transformationseinrichtung 70. Diese Transformationseinrichtung 70 weist eingangsseitig zwei Quadrierer 80 und 82 und ausgangsseitig einen Dividierer 84 auf. Die Ausgänge der beiden Quadrierer 80 und 82 sind mittels eines Addierers 86 miteinander verbunden, dessen Ausgang mit einem Radizierer 88 verbunden ist. Dem Radizierer 88 ist ein Multiplizierer 90 nachgeschaltet, dessen Ausgang mit dem ersten Eingang des ausgangsseitigen Dividierers 84 verknüpft ist. Am zweiten Eingang des Multiplizierers 90 steht der Wert der Zwischenkreisspannung $U_d$ des Umrichters an. Dem zweiten Eingang des ausgangsseitigen Dividierers 84 ist ein Konstantglied 92 vorgeschaltet, an dessen Eingang ein Strombelag i des ständerorientierten Stromvektors $i_S$ ansteht. Mittels dieser Schaltung kann aus den Istwerten der Wirk- und Blindleistungen $P/U_d$ und $P_q/U_d$, die jeweils auf den Wert der Zwischenkreisspannung $U_d$ bezogen sind, der Grundschwingungs-Effektivistwert der Wechselrichter-Ausgangsspannung $U_x$ ermittelt werden. Mittels dieses Grundschwingungs-Effektivistwertes $U_x$ erkennt die Regelung, ob Motoren des Gruppenantriebs zu- oder abgeschaltet werden oder die Betriebspunkte der einzelnen Motoren sich voneinander entfernen. Wenn beispielsweise Motoren vom Gruppenantrieb abgeschaltet werden, so steigt der Grundschwingungs-Effektivistwert $U_x$. Dadurch wird die Regeldifferenz $U_e$ und der Führungswert der flußbildenden Stromkomponente $i_{dw}$ erniedrigt, bis der Grundschwingungs-Effektivistwert $U_x$ gleich dem Sollwert $U_w$ der Wechselrichter-Ausgangsspannung ist, die in Abhängigkeit der Wechselrichterfrequenz $f_1$ vorbestimmt ist.

**Patentansprüche**

1. Verfahren zur direkten Regelung von Ausgangsströmen ($i_{Rx}, i_{Sx}, i_{Tx}$) eines Wechselrichters (4), der eine Drehfeldmaschine (2) ohne Drehzahlistwertgeber speist, mittels einer unterlagerten Stromregelung (8), der ein Strom-Führungsgrößensystem ($i_{Rw}, i_{Sw}, i_{Tw}$) zugeführt ist, **dadurch gekennzeichnet,** daß zur Erzeugung dieses Strom-Führungsgrößensystems ($i_{Rw}, i_{Sw}, i_{Tw}$)
   - die Istwerte der der Drehfeldmaschine (2) zugeführten Wirk- und Blindströme ($i_{Wist}, i_{Bist}$) aus den Ständerströmen ($i_{Rx}, i_{Sx}, i_{Tx}$) und den Schaltzustandssignalen ($S_R, S_S, S_T$) der Stromrichterventile des die Drehfeldmaschine (2) speisenden Wechselrichters (4) berechnet werden,
   - diese berechneten Istwerte ($i_{Wist}, i_{Bist}$) in Istwerte einer drehmoment- und einer flußbildenden Stromkomponente ($i_{qist}, i_{dist}$) gewandelt werden,
   - ein Führungswert der drehmomentbildenden Stromkomponente ($i_{qw}$) aus einem Vergleich eines vorgegebenen Drehzahlsollwertes ($n_{soll}$) mit einem mittels des Istwertes der drehmomentbildenden Stromkomponente ($i_{qist}$) nachgebildeten Drehzahlistwert ($n_{ist}$) erzeugt wird,
   - ein Führungswert der flußbildenden Stromkomponente ($i_{dw}$) aus einem Vergleich eines in Abhängigkeit der Ständerfrequenz ($f_1$) der Drehfeldmaschine (2) vorgegebenen Sollwertes der flußbildenden Stromkomponente ($i_{dsoll}$) mit dem Istwert der flußbildenden Stromkomponente ($i_{dist}$) erzeugt wird und
   - diese feldorientierten Stromführungswerte ($i_{qw}, i_{dw}$) in einen ständerorientierten Stromvektor ($i_S$) transformiert werden, der in das Strom-Führungsgrößensystem ($i_{Rw}, i_{Sw}, i_{Tw}$) gewandelt wird.

2. Verfahren zur direkten Regelung von Ausgangsströmen ($i_{Rx}, i_{Sx}, i_{Tx}$) eines Wechselrichters (4), der mehrere Drehfeldmaschinen (2) ohne Drehzahlistwertgeber speist, mittels einer unterlagerten Stromregelung (8), der ein Strom-Führungsgrößensystem ($i_{Rw}, i_{Sw}, i_{Tw}$) zugeführt ist, **dadurch gekennzeichnet,** daß zur Erzeugung dieses Strom-Führungsgrößensystems ($i_{Rw}, i_{Sw}, i_{Tw}$)
   - die Istwerte der der Drehfeldmaschinen (2) zugeführten Wirk- und Blindleistungen ($P/U_d, P_q/U_d$) aus den Ausgangsströmen ($i_{Rx}, i_{Sx}, i_{Tx}$) und den Schaltzustandssignalen ($S_R, S_S, S_T$) der Stromrichterventile des Wechselrichters (4) berechnet werden,
   - aus diesen berechneten Istwerte ($P/U_d, P_q/U_d$) mittels eines Strombelags ($\hat{i}_w$) des Strom-Führungsgrößensystems ($i_{Rw}, i_{Sw}, i_{Tw}$) einerseits die Istwerte der den Drehfeldmaschinen (2) zugeführten Wirk- und Blindströme ($i_{Wist}, i_{Bist}$) und andererseits der Grundschwingungs-Effektivistwert der Ausgangsspannung ($U_x$) des Wechselrichters (4) berechnet werden,

EP 0 437 669 B1

- diese berechneten Istwerte der Wirk- und Blindströme ($i_{Wist}, i_{Bist}$) in Istwerte einer drehmoment- und einer flußbildenden Stromkomponente ($i_{qist}$, $i_{dist}$) gewandelt werden,

- ein Führungswert der drehmomentbildenden Stromkomponente ($i_{qw}$) aus einem Vergleich eines vorgegebenen Drehzahlsollwertes ($n_{soll}$) mit einem mittels des Istwertes der drehmomentbildenden Stromkomponente ($i_{qist}$) nachgebildeten Drehzahlistwert ($n_{ist}$) erzeugt wird,

- ein Führungswert der flußbildenden Stromkomponente ($i_{dw}$) aus einem Vergleich eines in Abhängigkeit der Ständerfrequenz ($f_1$) der Drehfeldmaschine (2) vorgegebenen Sollwertes der Ausgangsspannung ($U_w$) des Wechselrichters (4) mit dem berechneten Grundschwingungs-Effektivistwert der Ausgangsspannung ($U_x$) des Wechselrichters (4) erzeugt wird und

- diese feldorientierten Stromführungswerte ($i_{qw}$, $i_{dw}$) in einen ständerorientierten Stromvektor ($\underline{i}_S$) transformiert werden, der in das Strom-Führungsgrößensystem ($i_{Rw}$, $i_{Sw}$, $i_{Tw}$) gewandelt wird.

3. Verfahren nach Anspruch 1 oder 2, **dadurch gekennzeichnet,** daß die Istwerte der Wirk- und Blindströme ($i_{Wist}$, $i_{Bist}$) gemäß folgender Gleichungen

$$i_{Wist} = \hat{i}_w \cdot \cos\varphi = \hat{i}_w \cdot \frac{1}{\sqrt{1+\tan^2\varphi}}$$

$$i_{Bist} = \hat{i}_w \cdot \sin\varphi = i_{Wist} \cdot \tan\varphi$$

berechnet werden, wobei

$$\tan\varphi = \frac{P_q/U_d}{P/U_d} = \frac{P_q}{P}$$

und die auf eine Zwischenkreisspannung ($U_d$) bezogene Blind- und Wirkleistung ($P_q$, $P$) aus den Strangströmen ($i_{Rx}$, $i_{Sx}$, $i_{Tx}$) und den Schaltzusbandssignalen ($S_R$, $S_S$, $S_T$) der Wechselrichterventile ermittelt werden.

4. Verfahren nach Anspruch 1, **dadurch gekennzeichnet,** daß zur Ermittlung des Führungswertes der flußbildenden Stromkomponente ($i_{dw}$) für einen vorbestimmten Lastbereich der Sollwert der flußbildenden Komponente ($i_{dsoll}$) gleich dem Führungswert der erzeugten drehmomentbildenden Stromkomponente ($i_{qw}$) gesetzt wird.

5. Verfahren nach Anspruch 2, **dadurch gekennzeichnet,** daß zur Kompensation von Spannungsabfällen an den Motorzuleitungen und an den Wicklungswiderständen (R) der Ständerwicklungen der Drehfeldmaschine (2) der Sollwert der Ausgangsspannung ($U_w$) des Wechselrichters (4) mit einem in Abhängigkeit des Führungswertes der drehmomentbildenden Stromkomponente ($i_{qw}$) gebildeten Korrekturwert ($U_{KR}$) beaufschlagt wird.

6. Verfahren nach Anspruch 1 oder 2, **dadurch gekennzeichnet,** daß zur Nachbildung des Istwertes der Drehzahl ($n_{ist}$) der Drehfeldmaschine (2) ein Beschleunigungsmoment ($i_{qa}$), ermittelt aus der Differenz des erzeugten Führungsgrößenwertes und des Istwertes der drehmomentbildenden Stromkomponenten ($i_{qw}$ und $i_{qist}$), integriert wird.

7. Verfahren nach Anspruch 6, **dadurch gekennzeichnet,** daß dem nachgebildeten Istwert der Drehzahl ($n_{ist}$) das ermittelte Beschleunigungsmoment ($i_{qa}$) aufaddiert wird.

8. Verfahren nach Anspruch 1 und 3 oder 2, **dadurch gekennzeichnet,** daß der Phasenwinkel ($\phi$) zwischen den Strangströmen ($i_{Rx}$, $i_{Sx}$, $i_{Tx}$) und den Strangspannungen ($u_{Rx}$, $u_{Sx}$, $u_{Tx}$) mittels der auf die Zwischenkreisspannung ($U_d$) bezogenen Blind- und Wirkleistung ($P_q$, $P$) gemäß folgender Gleichung

9

$$\varphi = \arctan \frac{P_q/U_d}{P/U_d}$$

berechnet wird, und daß dieser berechnete Phasenwinkel ($\phi$) in eine Frequenz ($f_\phi$) gewandelt wird, die mit einer vorbestimmten Kippschlupffrequenz ($f_{sk}$) derart verglichen wird, daß sobald die Frequenz ($f_\phi$) einen vorbestimmten Wert unterhalb der Kippschlupffrequenz ($f_{sk}$) erreicht hat, der Drehzahlsollwert ($n_{soll}$) erniedrigt bzw. erhöht wird.

9. Verfahren nach Anspruch 5, **dadurch gekennzeichnet,** daß der gebildete Korrekturwert ($U_{KR}$) mit einem Verhältnis einer flußbildenden Referenzstromkomponente ($i_{dRef}$) zum Führungswert der flußbildenden Stromkomponente ($i_{dw}$) gewichtet wird und dieser gewichtete Korrekturwert ($U'_{KR}$) dem ermittelten Sollwert der Ausgangsspannung ($U_w$) des Wechselrichters (4) aufgeschaltet wird.

10. Schaltungsanordnung zur Durchführung des Verfahren nach Anspruch 1 mit einem Wechselrichter (4), der eine Drehfeldmaschine (2) ohne Drehzahlistwertgeber speist, wobei die Stellgrößen des Wechselrichters (4) mittels eines Strom-Führungsgrößenbilders (6) mit unterlagerter Stromregelung (8) gebildet werden, **dadurch gekennzeichnet,** daß der Strom-Führungsgrößenbilder (6) eingangsseitig einen Istwertrechner (10) und einen ersten Vergleicher (12) aufweist, wobei am positiven Eingang des ersten Vergleichers (12) ein vorgegebener Drehzahlsollwert ($n_{soll}$) ansteht und sein negativer Eingang mit dem Ausgang eines Drehzahlistwertmodells (16) verknüpft ist, das eingangsseitig mit dem Ausgang des Istwertrechners (10) verbunden ist, an dessen Eingängen die Ausgangsströme ($i_{Rx}$, $i_{Sx}$, $i_{Tx}$) und die Schaltzustandssignale ($S_R$, $S_S$, $S_T$) der Stromrichterventile des Wechselrichters (4) anstehen, und ausgangsseitig eine Transformationseinrichtung (14) aufweist, die eingangsseitig einerseits mit einem dem ersten Vergleicher (12) nachgeschalteten Drehzahlregler (22) und andererseits mit einem einem zweiten Vergleicher (42) nachgeschalteten flußbildenden Stromkomponentenregler (24) verknüpft ist, wobei der negative Eingang des zweiten Vergleichers (42) mit einem Ausgang einer dem Istwertrechner (10) nachgeschalteten weiteren Transformationseinrichtung (36) und der positive Eingang des zweiten Vergleichers (42) mit einem flußbildenden Stromkomponenten-Sollwertbilder (18) verbunden sind, und daß der Ausgang des Drehzahlreglers (22) einerseits mit dem Drehzahlistwertmodell (16) und andererseits mit einer Schlupfkompensation (20) verknüpft ist, wobei die Schlupfkompensation (20) eingangsseitig mit dem Ausgang des flußbildenden Stromkomponenten-Sollwertbilders (18) und ausgangsseitig mit einem Addierglied (34) verbunden ist, dessen zweiter Eingang mit dem Ausgang des Drehzahlistwertmodells (16) und dessen Ausgang mit einem weiteren Eingang der ausgangsseitigen Transformationseinrichtung (14) verknüpft sind.

11. Schaltungsanordnung zur Durchführung des Verfahrens nach Anspruch 2 mit einem Wechselrichter (4), der mehrere Drehfeldmaschinen (2) speist, wobei die Stellgrößen des Wechselrichters (4) mittels eines Strom-Führungsgrößenbilders (6) mit unterlagerter Stromregelung (8) gebildet werden, **dadurch gekennzeichnet,** daß der Strom-Führungsgrößenbilder (6) eingangsseitig einen Istwertrechner (10) und einen ersten Vergleicher (12) aufweist, wobei am positiven Eingang des ersten Vergleichers (12) ein vorgegebener Drehzahlsollwert ($n_{soll}$) ansteht und sein negativer Eingang mit dem Ausgang eines Drehzahlistwertmodells (16) verknüpft ist, das eingangsseitig mit dem Ausgang des Istwertrechners (10) verbunden ist, an dessen Eingängen die Ausgangsströme ($i_{Rx}$, $i_{Sx}$, $i_{Tx}$) und die Schaltungssignale ($S_R$, $S_S$, $S_T$) der Stromrichterventile des Wechselrichters (4) anstehen, und ausgangsseitig eine Transformationseinrichtung (14) aufweist, die eingangsseitig einerseits mit einem dem ersten Vergleicher (12) nachgeschalteten Drehzahlregler (22) und andererseits mit einem einem dritten Vergleicher (68) nachgeschalteten Spannungsregler (60) verknüpft ist, wobei der negative Eingang des dritten Vergleichers (68) mit einem Ausgang einer dem Istwertrechner (10) nachgeschalteten weiteren Transformationseinrichtung (70) und der positive Eingang des dritten Vergleichers (68) mit einem Sollwertbilder (66) für die Ausgangsspannung ($U_w$) des Wechselrichters (4) verbunden sind, und daß der Ausgang des Drehzahlreglers (22) einerseits mit dem Drehzahlistwertmodell (16) und andererseits mit einer Schlupfkompensation (20) verknüpft ist, wobei die Schlupfkompensation (20) eingangsseitig mit dem Ausgang des Spannungsreglers (60) und ausgangsseitig mit einem Addierglied (34) verbunden ist, dessen zweiter Eingang mit dem Ausgang des Drehzahlistwertmodells (16) und dessen Ausgang einerseits mit einem weiteren Eingang der ausgangsseitigen Transformationseinrichtung (14) und andererseits mit dem Eingang des Sollwertbildners (66) für die Ausgangsspannung ($U_w$) des Wechselrichters (4) verknüpft sind.

12. Schaltungsanordnung nach Anspruch 11, **dadurch gekennzeichnet,** daß dem Stromkomponentenregler (24) ein Schalter (58) derart nachgeschaltet ist, daß dessen Ausgang einerseits mit der ausgangsseitigen Transformationseinrichtung (14) und andererseits mit dem Ausgang des Spannungsreglers (60) verknüpft ist, und daß dem Ausgang des Addierers (34) derart ein weiterer Schalter (64) nachgeschaltet ist, daß dessen Ausgang mit dem flußbildenden Stromkomponenten-Sollwertbildner (18) und dessen Eingang mit dem Eingang des Sollwertbildners (66) für die Wechselrichter-Ausgangsspannung ($U_w$) verbunden ist.

13. Schaltungsanordnung nach Anspruch 10 oder 11, **dadurch gekennzeichnet,** daß der Istwertrechner (10) aus einer Leistungserfassung (38) und einer Istwertrecheneinrichtung (40) besteht.

14. Schaltungsanordnung nach Anspruch 10 oder 11, **dadurch gekennzeichnet,** daß das Drehzahlistwertmodell (16) einen Vergleicher (26) enthält, an dessen negativen Eingang ein drehmomentenbildender Stromkomponenten-Istwert ($i_{qist}$) und an dessen positiven Eingang ein drehmomentenbildender Stromkomponenten-Führungswert ($i_{qw}$) anstehen, wobei der Ausgang des Vergleicher (26) mit einem integral wirkenden Regler (28) verknüpft ist.

15. Schaltungsanordnung nach Anspruch 14, **dadurch gekennzeichnet,** daß der Ausgang des Vergleichers (26) mit einem proportional wirkenden Regler (30) verknüpft ist, dessen Ausgang mittels eines Addiergliedes (32) mit dem Ausgang des integral wirkenden Reglers (28) verbunden ist,

16. Schaltungsanordnung nach Anspruch 10 oder 11, **dadurch gekennzeichnet,** daß die ausgangsseitige Transformationseinrichtung (14) einen K/P-Wandler (46) und einen Führungsgrößensystembildner (48) enthält.

17. Schaltungsanordnung nach Anspruch 10, **dadurch gekennzeichnet,** daß der flußbildende Stromkomponenten-Sollwertbildner (18) aus einem lastabhängigen und einem lastunabhängigen Sollwertbildner (50, 44) besteht, deren Ausgänge mittels eines Umschalters (52) in Abhängigkeit einer Last mit dem Ausgang des flußbildenden Stromkomponenten-Sollwertbildners (18) verknüpfbar sind.

18. Schaltungsanordnung nach Anspruch 10 oder 11, **dadurch gekannzeichnet,** daß eine Kippschutzeinrichtung (54) vorgesehen ist, die eingangsseitig einerseits mit dem Istwertrechner (10) und andererseits mit der Schlupfkompensation (20) und ausgangsseitig mit einem Sollwertstellglied (56) verbunden ist.

19. Schaltungsanordnung nach Anspruch 11, **dadurch gekennzeichnet,** daß die weitere Transformationseinrichtung (70) eingangsseitig zwei Quadrierer (80, 82), deren Ausgänge mit den Eingängen eines Addierers (86) verknüpft sind, dessen Ausgang über einen Radizierer (88) einem ersten Eingang eines Multiplizierers (90) verbunden ist, an dessen zweitem Eingang der Wert der Zwischenkreisspannung ($U_d$) ansteht, und ausgangsseitig einen Dividierer (84) aufweist, dessen einer Eingang mit dem Ausgang des vorgeschalteten Multiplizierers (90) und dessen anderer Eingang mit einem Konstantglied (92) verknüpft ist, an dessen Eingang der Strombelag ($\hat{i}$) des ständerorientierten Ständerstromvektors ($\underline{i_s}$) ansteht.

20. Schaltungsanordnung nach Anspruch 11, **dadurch gekennzeichnet,** daß dem Sollwertbildner (66) für die Wechselrichter-Ausgangsspannung ($U_w$) ein Addierer (72) nachgeschaltet ist, dessen Ausgang mit dem positiven Eingang des dritten Vergleichers (68) und dessen zweiter Eingang mit dem Ausgang eines Konstantgliedes (74) verbunden ist, an dessen Eingang der Führungswert der flußbildenden Stromkomponente ($i_{dw}$) ansteht.

21. Schaltungsanordnung nach Anspruch 11, **dadurch gekennzeichnet,** daß dem Sollwertbildner (66) für die Wechselrichter-Ausgangsspannung ($U_w$) ein Addierer (72) nachgeschaltet ist, dessen Ausgang mit dem positiven Eingang des dritten Vergleichers (68) und dessen zweiter Eingang mit dem Ausgang eines Multiplizierers (76) verknüpft ist, daß dem einen Eingang des Multiplizierers (76) ein Konstantglied (74) vorgeschaltet ist, an dessen Eingang der Führungswert der flußbildenden Stromkomponente ($i_{dw}$) ansteht, und daß dem zweiten Eingang des Multiplizierers (76) ein Dividierer (78) vorgeschaltet ist, dessen zweiter Eingang mit dem Ausgang des Spannungsreglers (60) verknüpft ist und an dessen erstem Eingang eine flußbildende Referenzstromkomponente ($i_{dRef}$) ansteht.

22. Schaltungsanordnung nach Anspruch 11, **dadurch gekennzeichnet,** daß als Sollwertbildner (66) für die Wechselrichter-Ausgangsspannung ($U_w$) ein Kennliniengeber vorgesehen ist.

**Claims**

1. Method for the direct control of output currents ($i_{Rx}$, $i_{Sx}$, $i_{Tx}$) of an inverter (4), which feeds an induction machine (2) without an actual speed value sensor, by means of a secondary current control (8), to which a current command variable system ($i_{Rw}$, $i_{Sx}$, $i_{Tx}$) is supplied, characterised in that for the purpose of generating this current command variable system ($i_{Rw}$, $i_{Sw}$, $i_{Tw}$)
   - the actual values of the active and reactive currents ($i_{Wist}$, $i_{Bist}$) supplied to the induction machine (2) are calculated from the stator currents ($i_{Rx}$, $i_{Sx}$, $i_{Tx}$) and the switching state signals ($S_R$, $S_S$, $S_T$) of the power converter valves of the inverter (4) feeding the induction machine (2),
   - these calculated actual values ($i_{Wist}$, $i_{Bist}$) are converted into actual values of a torque-and a flux-forming current component ($i_{qist}$, $i_{dist}$),
   - a command value of the torque-forming current component ($i_{qw}$) is generated from a comparison of a given rated speed value ($n_{soll}$) with an actual speed value ($n_{ist}$) which is simulated by means of the actual value of the torque-forming current component ($i_{qist}$),
   - a command value of the flux-forming current component ($i_{dw}$) is generated from a comparison of a rated value of the flux-forming current component ($i_{dsoll}$), which rated value is given as a function of the stator frequency ($f_1$) of the induction machine (2), with the actual value of the flux-forming current component ($i_{dist}$), and
   - these field-oriented current command values ($i_{qw}$, $i_{dw}$) are transformed into a stator-oriented current vector ($\underline{i}_S$), which is converted into the current command variable system ($i_{Rw}$, $i_{Sw}$, $i_{Tw}$).

2. Method for the direct control of output currents ($i_{Rx}$, $i_{Sx}$, $i_{Tx}$) of an inverter (4), which feeds several induction machines (2) without an actual speed value sensor, by means of a secondary current control (8), to which a current command variable system ($i_{Rw}$, $i_{Sw}$, $i_{Tw}$) is supplied, characterised in that for the purpose of generating this current command variable system ($i_{Rw}$, $i_{Sw}$, $i_{Tw}$)
   - the actual values of the active and reactive currents ($P/U_d$, $P_q/U_d$) supplied to the induction machines (2) are calculated from the output currents ($i_{Rx}$, $i_{Sx}$, $i_{Tx}$) and the switching state signals ($S_R$, $S_S$, $S_T$) of the power converter valves of the inverter (4),
   - the actual values of the active and reactive currents ($i_{Wist}$, $i_{Bist}$) supplied to the induction machines (2), on the one hand, and the fundamental oscillation-actual rms value of the output voltage ($U_x$) of the inverter (4), on the other hand, are calculated from these calculated actual values ($P/U_d$, $P_q/U_d$) by means of a current distribution ($\widehat{i}_w$) of the current command variable system ($i_{Rw}$, $i_{Sw}$, $i_{Tw}$),
   - these calculated actual values of the active and reactive currents ($i_{Wist}$, $i_{Bist}$) are converted into actual values of a torque- and a flux-forming current component ($i_{qist}$, $i_{dist}$),
   - a command value of the torque-forming current component ($i_{qw}$) is generated from a comparison of a given rated speed value ($n_{soll}$) with an actual speed value ($n_{ist}$) which is simulated by means of the actual value of the torque-forming current component ($i_{qist}$),
   - a command value of the flux-forming current component ($i_{dw}$) is generated from a comparison of a rated value of the output voltage ($U_w$) of the inverter (4), which rated value is given as a function of the stator frequency ($f_1$) of the induction machine (2), with the calculated fundamental oscillation-actual rms value of the output voltage ($U_x$) of the inverter (4), and
   - these field-oriented current command values ($i_{qw}$, $i_{dw}$) are transformed into a stator-oriented current vector ($\underline{i}_S$), which is converted into the current command variable system ($i_{Rw}$, $i_{Sw}$, $i_{Tw}$).

3. Method according to claim 1 or 2, characterised in that the actual values of the active and reactive currents ($i_{Wist}$, $i_{Bist}$) are calculated according to the following equations:

$$i_{Wist} = \overset{\wedge}{i}_w \cdot \cos\gamma = \overset{\bullet}{i}_w \cdot \frac{1}{\sqrt{1+\tan^2\gamma}}$$

$i_{Bist} = \hat{i}_w \bullet \sin\phi = i_{Wist} \bullet \tan\phi,$

where

$$\tan\varphi = \frac{P_q/U_d}{P/U_d} = \frac{P_q}{P},$$

and the reactive and active power ($P_q$, P) related to an intermediate circuit voltage ($U_d$) are determined from the phase currents ($i_{Rx}$, $i_{Sx}$, $i_{Tx}$) and the switching state signals ($S_R$, $S_S$, $S_T$) of the inverter valves.

4. Method according to claim 1, characterised in that for the purpose of determining the command value of the flux-forming current component ($i_{dw}$) for a predetermined load range, the rated value of the flux-forming component ($i_{dsoll}$) is set as to be equal to the command value of the generated torque-forming current component ($i_{qw}$).

5. Method according to claim 2, characterised in that for the compensation of voltage drops at the motor feed lines and at the winding resistors (R) of the stator windings of the induction machine (2), there is applied to the rated value of the output voltage ($U_w$) of the inverter (4) a correction value ($U_{KR}$) which is formed as a function of the command value of the torque-forming current component ($i_{qw}$).

6. Method according to claim 1 or 2, characterised in that a moment of acceleration ($i_{qa}$), determined from the difference of the generated command variable value and the actual value of the torque-forming current components ($i_{qw}$ and $i_{qist}$), is integrated for the purpose of simulating the actual value of the speed ($n_{ist}$) of the induction machine (2).

7. Method according to claim 6, characterised in that the determined moment of acceleration ($i_{qa}$) is added to the simulated actual value of the speed ($n_{ist}$).

8. Method according to claim 1 and 3 or 2, characterised in that the phase angle ($\phi$) between the phase currents ($i_{Rx}$, $i_{Sx}$, $i_{Tx}$) and the phase voltages ($u_{Rx}$, $u_{Sx}$, $u_{Tx}$) is calculated by means of the reactive and active power ($P_q$, P), relative to the intermediate circuit voltage ($U_d$), according to the following equation

$$\varphi = \arctan \frac{P_q/U_d}{P/U_d}$$

and in that this calculated phase angle ($\phi$) is transformed into a frequency ($f_\phi$) which is compared with a predetermined pull-out slip frequency ($f_{sk}$) in such a way that as soon as the frequency ($f_\phi$) has attained a predetermined value below the pull-out slip frequency ($f_{sk}$), the rated speed value ($n_{soll}$) is lowered or raised, as the case may be.

9. Method according to claim 5, characterised in that the correction value ($U_{KR}$) formed is weighted with a ratio of a flux-forming reference current component ($i_{dRef}$) relative to the command value of the flux-forming current component ($i_{dw}$) and this weighted correction value ($U_{KR}$) is applied to the determined rated value of the output voltage ($U_w$) of the inverter (4).

10. Circuit arrangement for carrying out the method according to claim 1 with an inverter (4) which feeds an induction machine (2) without an actual speed value sensor, in which the actuating variables of the inverter (4) are formed by means of a current command variable former (6) with secondary current control (8), characterised in that the current command variable former (6) has, on the input side, an actual value computer (10) and a first comparator (12), in which case there occurs at the positive input of the first comparator (12) a given rated speed value ($n_{soll}$) and its negative input is linked with the output of an actual speed value model (16) which is connected on the input side to the output of the

13

actual value computer (10), at the inputs of which occur the output currents ($i_{Rx}$, $i_{Sx}$, $i_{Tx}$) and the switching state signals ($S_R$, $S_S$, $S_T$) of the power converter valves of the inverter (4), and has on the output side, a transformation device (14) which on the input side, on the one hand, is linked with a speed controller (22) subsequently connected to the first comparator (12) and, on the other hand, is linked with a flux-forming current component controller (24) subsequently connected to a second comparator (42), in which case the negative input of the second comparator (42) is connected to an output of a further transformation device (36) subsequently connected to the actual value computer (10) and the positive input of the second comparator (42) is connected to a flux-forming current component-rated value former (18), and in that the output of the speed controller (22), on the one hand, is linked with the actual speed value model (16) and, on the other hand, is linked with a slip-compensator (20), in which case the slip-compensator (20) on the input side is connected to the output of the flux-forming current component-rated value former (18) and on the output side is connected to an adder (34), the second input of which is linked with the output of the actual speed value model (16) and the output of which is linked with a further input of the transformation device (14) which is on the output side.

11. Circuit arrangement for carrying out the method according to claim 2 with an inverter (4) which feeds several induction machines (2), in which the actuating variables of the inverter (4) are formed by means of a current command variable former (6) with secondary current control (8), characterised in that the current command variable former (6) has, on the input side, an actual value computer (10) and a first comparator (12), in which case there occurs at the positive input of the first comparator (12) a given rated speed value ($n_{soll}$) and its negative input is linked with the output of an actual speed value model (16) which is connected on the input side to the output of the actual value computer (10), at the inputs of which occur the output currents ($i_{Rx}$, $i_{Sx}$, $i_{Tx}$) and the switching signals ($S_R$, $S_S$, $S_T$) of the power converter valves of the inverter (4), and has, on the output side, a transformation device (14) which on the input side, on the one hand, is linked with a speed controller (22) subsequently connected to the first comparator (12) and, on the other hand, is linked with a current controller (60) subsequently connected to a third comparator (68), in which case the negative input of the third comparator (68) is connected to an output of a further transformation device (70) subsequently connected to the actual value computer (10) and the positive input of the third comparator (68) is connected to a rated value former (66) for the output voltage ($U_w$) of the inverter (4), and in that the output of the speed controller (22), on the one hand, is linked with the actual speed value model (16) and, on the other hand, is linked with a slip-compensator (20), in which case the slip-compensator (20) on the input side is connected to the output of the voltage controller (60) and on the output side is connected to an adder (34), the second input of which is linked with the output of the actual speed value model (16) and the output of which is linked, on the one hand, with a further input of the transformation device (14) which is on the output side and, on the other hand, with the input of the rated value former (66) for the output voltage ($U_w$) of the inverter (4).

12. Circuit arrangement according to claim 11, characterised in that a switch (58) is subsequently connected to the current component controller (24) in such a way that its output is linked, on the one hand, with the transformation device (14) which is on the output side and, on the other hand, is linked with the output of the voltage controller (60), and in that a further switch (64) is subsequently connected to the output of the adder (34) in such a way that its output is connected to the flux-forming current component rated value former (18) and its input is connected to the input of the rated value former (66) for the inverter-output voltage ($U_w$).

13. Circuit arrangement according to claim 10 or 11, characterised in that the actual value computer (10) consists of a power detector (38) and an actual value-computing device (40).

14. Circuit arrangement according to claim 10 or 11, characterised in that the rated speed value model (16) contains a comparator (26), at the negative input of which a torque-forming current component actual value ($i_{qist}$) and at the positive input of which a torque-forming current component command value ($i_{qw}$) occur, in which case the output of the comparator (26) is linked with an integral-action controller (28).

15. Circuit arrangement according to claim 14, characterised in that the output of the comparator (26) is linked with a proportional-action controller (30), the output of which is connected to the output of the integral-action controller (28) by means of an adder (32).

16. Circuit arrangement according to claim 10 or 11, characterised in that the transformation device (14) which is on the output side, contains a cartesian/polar converter (46) and a command variable system former (48).

17. Circuit arrangement according to claim 10, characterised in that the flux-forming current component rated value former (18) consists of a load-dependent and a load-independent rated value former (50, 44), the outputs of which can be linked, by means of a changeover switch (52) as a function of a load, with the output of the flux-forming current component rated value former (18).

18. Circuit arrangement according to claim 10 or 11, characterised in that a pull-out protection device (54) is provided, which is connected on the input side, on the one hand, to the actual value computer (10) and, on the other hand, to the slip compensator (20) and is connected on the output side to a rated value control element (56).

19. Circuit arrangement according to claim 11, characterised in that the further transformation device (70) has on the input side two squarers (80, 82), the outputs of which are linked with the inputs of an adder (86), the output of which is connected by way of a root extractor (88) to a first input of a multiplier (90), at the second input of which occurs the value of the intermediate circuit voltage ($U_d$), and on the output side a divider (84), the one input of which is linked with the output of the previously connected multiplier (90) and the other input of which is linked with a constant element (92), at the input of which occurs the current distribution ($\hat{i}$) of the stator-oriented stator current vector ($\underline{i}_S$).

20. Circuit arrangement according to claim 11, characterised in that subsequently connected to the rated value former (66) for the inverter-output voltage ($U_w$) there is an adder (72), the output of which is connected to the positive input of the third comparator (68) and the second input of which is connected to the output of a constant element (74), at the input of which occurs the command value of the flux-forming current component ($i_{dw}$).

21. Circuit arrangement according to claim 11, characterised in that subsequently connected to the rated value former (66) for the inverter-output voltage ($U_w$) there is an adder (72), the output of which is linked with the positive input of the third comparator (68) and the second input of which is linked with the output of a multiplier (76), in that there is previously connected to the one input of the multiplier (76) a constant element (74), at the input of which occurs the command value of the flux-forming current component ($i_{dw}$) and in that previously connected to the second input of the multiplier (76) there is a divider (78), the second input of which is linked with the output of the voltage controller (60) and at the first input of which occurs a flux-forming reference current component ($i_{dRef}$).

22. Circuit arrangement according to claim 11, characterised in that a characteristic curve generator is provided as a rated value former (66) for the inverter-output voltage ($U_w$).

**Revendications**

1. Procédé de régulation directe de courants de sortie ($i_{Rx}$, $i_{Sx}$, $i_{Tx}$) d'un onduleur (4), qui alimente une machine à champ tournant (2) sans transmetteur de la valeur réelle de la vitesse de rotation, au moyen d'une unité asservie (8) de régulation du courant, à laquelle est envoyé un système de grandeurs de passage du courant ($i_{Rw}$, $i_{Sw}$, $i_{Tw}$), caractérisé par le fait que pour la production de ce système de grandeurs de passage du courant ($i_{Rw}$, $i_{Sw}$, $i_{Tw}$)
   - les valeurs réelles des courants actif et réactif ($i_{Wist}$, $i_{Bist}$), qui sont envoyés à la machine à champ tournant (2), sont calculées à partir des courants statoriques ($i_{Rx}$, $i_{Sx}$, $i_{Tx}$) et des signaux d'état de commutation ($S_R$, $S_S$, $S_T$) des valves de conversion de courant de l'onduleur (4) qui alimente la machine à champ tournant (2),
   - ces valeurs réelles calculées ($i_{Wist}$, $i_{Bist}$) sont converties en des valeurs réelles d'une composante de courant représentant le couple et d'une composante de courant représentant le flux ($i_{qist}$, $i_{dist}$),
   - une valeur de passage de la composante de courant ($i_{qw}$) représentant le couple est produite à partir d'une comparaison entre une valeur de consigne prédéterminée ($n_{soll}$) de la vitesse de rotation et une valeur réelle ($n_{ist}$) de la vitesse de rotation, qui est simulée au moyen de la valeur réelle de la composante de courant ($i_{qist}$) représentant le couple,

- une valeur de passage de la composante de courant ($i_{dw}$) représentant le flux est produite à partir d'une comparaison entre une valeur de consigne, prédéterminée en fonction de la fréquence ($f_1$) du stator de la machine à champ tournant (2), de la composante de courant ($i_{dsoll}$) représentant le flux, et la valeur réelle de la composante de courant ($i_{dist}$) représentant le flux, et
- ces valeurs de passage du courant ($i_{qw}$, $i_{dw}$), qui sont rapportées au champ, sont transformées en un vecteur de courant ($\underline{i}_S$), qui est rapporté au stator et qui est converti en le système de grandeurs de passage du courant ($i_{Rw}$, $i_{Sw}$, $i_{Tw}$).

**2.** Procédé de régulation directe de courants de sortie ($i_{Rx}$, $i_{Sx}$, $i_{Tx}$) d'un onduleur (4), qui alimente plusieurs machines à champ tournant (2) sans transmetteur de la valeur réelle de la vitesse de rotation, au moyen d'une unité asservie (8) de régulation du courant, à laquelle est envoyé un système de grandeurs de passage du courant ($i_{Rw}$,$i_{Sw}$, $i_{Tw}$), caractérisé par le fait que pour la production de ce système de grandeurs de passage du courant ($i_{Rw}$, $i_{Sw}$, $i_{Tw}$)
- les valeurs réelles des puissances active et réactive ($P/U_d$, $P_q/U_d$), qui sont envoyées aux machines à champ tournant (2), sont calculées à partir des courants de sortie ($i_{Rx}$, $i_{Sx}$, $i_{Tx}$) et des signaux d'état de commutation ($S_R$, $S_S$, $S_T$) des valves de conversion de courant de l'onduleur (4),
- d'une part les valeurs réelles des courants actif et réactif ($i_{Wist}$, $i_{Bist}$), envoyés aux machines à champ tournant (2), et d'autre part la valeur réelle effective de l'oscillation de base de la tension de sortie ($U_x$) de l'onduleur (4) sont calculées à partir de ces valeurs réelles calculées ($P/U_d$, $P_q/U_d$), au moyen d'une densité linéique de courant ($\hat{\imath}_w$) du système de grandeurs de passage du courant ($i_{Rw}$, $i_{Sw}$, $i_{Tw}$),
- ces valeurs réelles calculées des courants actif et réactif ($i_{Wist}$, $i_{Bist}$) sont converties en des valeurs réelles d'une composante de courant représentant le couple et une composante de courant représentant le flux ($i_{qist}$,$i_{dist}$),
- une valeur de passage de la composante de courant ($i_{qw}$) représentant le couple est produite à partir d'une comparaison entre une valeur de consigne prédéterminée ($n_{soll}$) de la vitesse de rotation et une valeur réelle ($n_{ist}$) de la vitesse de rotation, qui est simulée au moyen de la valeur réelle de la composante de courant ($i_{qist}$) représentant le couple,
- une valeur de passage de la composante de courant ($i_{dw}$) représentant le flux est produite à partir d'une comparaison d'une valeur de consigne, qui est prédéterminée en fonction de la fréquence statorique ($f_1$) de la machine à champ tournant (2), de la tension de sortie ($U_w$) de l'onduleur (4) et la valeur réelle effective calculée de l'oscillation de base de la tension de sortie ($U_x$) de l'onduleur (4),
- ces valeurs de passage du courant ($i_{qw}$, $i_{dw}$) rapportées au champ sont transformées en un vecteur de courant ($\underline{i}_S$) qui est rapporté au stator et qui est converti en les systèmes de grandeurs de passage du courant ($i_{Rw}$, $i_{Sw}$, $i_{Tw}$).

**3.** Procédé suivant la revendication 1 ou 2, caractérisé par le fait que les valeurs réelles des courants actif et réactif ($i_{Wist}$, $i_{Bist}$) sont calculées conformément aux relations

$$i_{Wist} = \hat{\imath}_w \cdot \cos\varphi = \hat{\imath}_w \cdot \frac{1}{\sqrt{1+\tan^2\varphi}}$$

$$i_{Bist} = \hat{\imath}_w \cdot \sin\phi = i_{Wist} \cdot \tan\phi$$

avec

$$\tan\varphi = \frac{P_q/U_d}{P/U_d} = \frac{P_q}{P}$$

et les puissances active et réactive ($P_q$,P) rapportées à une tension ($U_d$) du circuit intermédiaire sont déterminées à partir des courants de phase ($i_{Rx}$, $i_{Sx}$, $i_{Tx}$) et des signaux d'états de commutation ($S_R$, $S_S$, $S_T$) des valves de conversion de courant.

4. Procédé suivant la revendication 1, caractérisé par le fait que pour la détermination de la valeur de passage des composantes de courant ($i_{dw}$) représentant le flux et pour une gamme de charges prédéterminée, la valeur de consigne de la composante ($i_{dsoll}$) représentant le flux est considérée égale à la valeur de passage de la composante de courant produite ($i_{qw}$) représentant le couple.

5. Procédé suivant la revendication 2, caractérisé par le fait que pour la compensation de chutes de tension dans les lignes d'alimentation du moteur et dans les résistances (R) des enroulements statiques de la machine à champ tournant (2), la valeur de consigne de la tension de sortie ($U_w$) de l'onduleur (4) est chargée par une valeur de correction ($U_{KR}$) formée en fonction de la valeur de passage de la composante de courant ($i_{qw}$) représentant le couple.

6. Procédé suivant la revendication 1 ou 2, caractérisé par le fait que pour simuler la valeur réelle de la vitesse de rotation ($n_{ist}$) de la machine à champ tournant (2), on intègre un moment d'accélération ($i_{qa}$), déterminé à partir de la différence entre la valeur produite de la grandeur de passage et la valeur réelle de la composante de courant représentant le couple ($i_{qw}$ et $i_{qist}$).

7. Procédé suivant la revendication 6, caractérisé par le fait que le moment d'accélération déterminé ($i_{qa}$) est ajouté à la valeur réelle simulée ($n_{ist}$) de la vitesse de rotation.

8. Procédé suivant les revendications 1 et 3 ou suivant la revendication 2, caractérisé par le fait que l'angle de phase ($\phi$) entre les courants de phase ($i_{Rx}$, $i_{Sx}$, $i_{Tx}$) et les tensions de phase ($u_{Rx}$, $u_{Sx}$, $u_{Tx}$) est calculé au moyen des puissances active et réactive ($P_q$, $P$), rapportées à la tension ($U_d$) du circuit intermédiaire, conformément à la relation

$$\varphi = \arctan \frac{P_q/U_d}{P/U_d}$$

et que cet angle de phase calculé ($\phi$) est converti en une fréquence ($f_\phi$), qui est comparée à une fréquence prédéterminée de glissement au décrochage ($f_{sk}$) de sorte que dès que la fréquence ($f_\phi$) a atteint une valeur prédéterminée inférieure à la fréquence de glissement au décrochage ($f_{sk}$), la valeur de consigne ($n_{soll}$) de la vitesse de rotation est diminuée ou augmentée.

9. Procédé suivant la revendication 5, caractérisé par le fait que la valeur de correction formée ($U_{KR}$) est pondérée par un rapport d'une composante de courant de référence ($i_{dRef}$) représentant le flux, à la valeur de passage de la composante de courant ($i_{dw}$) représentant le flux, et que cette valeur de correction pondérée ($U'_{KR}$) est appliquée à la valeur de consigne déterminée de la tension de sortie ($U_w$) de l'onduleur (4).

10. Montage pour la mise en oeuvre du procédé suivant la revendication 1 comportant un onduleur (4), qui alimente une machine à champ tournant (2) sans transmetteur de la valeur réelle de la vitesse de rotation, les grandeurs de réglage de l'onduleur (4) étant formées au moyen d'un dispositif (6) de formation des grandeurs de passage du courant comportant une unité asservie (8) de régulation du courant, caractérisé par le fait que le dispositif (6) de formation de la grandeur de passage du courant comporte, côté entrée, un calculateur (10) de la valeur réelle et un premier comparateur (12), une valeur de consigne prédéterminée ($n_{soll}$) de la vitesse de rotation étant appliquée à l'entrée positive du premier comparateur (12) et l'entrée négative du comparateur étant reliée à la sortie d'une unité (16) formant un modèle de la valeur réelle de la vitesse de rotation, qui est relié, côté entrée, à la sortie du calculateur (10) de la valeur réelle, et aux entrées duquel sont appliqués les courants de sortie ($i_{Rx}$, $i_{Sx}$, $i_{Tx}$) et les signaux d'états de commutation ($S_R$, $S_S$, $S_T$) des valves de conversion de courant de l'onduleur (4), et comporte, côté sortie, un dispositif de transformation (14), qui est relié, côté entrée, d'une part, à un régulateur (22) de la vitesse de rotation, branché en aval du premier comparateur (12), et, d'autre part, à un régulateur (24) de la composante de courant représentant le flux qui est branché

EP 0 437 669 B1

en aval d'un second comparateur (42), l'entrée négative du second comparateur (42) étant reliée à une sortie d'un autre dispositif de transformation (36), qui est branché en aval du calculateur (10) de la valeur réelle, et l'entrée positive du second comparateur (42) étant reliée à un dispositif (18) de formation de la valeur de consigne de la composante de courant représentant le flux, et que la sortie du régulateur (22) de la vitesse de rotation est connectée, d'une part, à l'unité (16) formant le modèle de la valeur réelle de la vitesse de rotation et, d'autre part, à une unité (20) de compensation de glissement, l'unité (20) de compensation de glissement étant reliée, côté entrée, à la sortie du dispositif (18) de formation de la valeur de consigne de la composante de courant représentant le flux, et côté sortie, à un circuit additionneur (34), dont la seconde entrée est reliée à la sortie de l'unité (16) formant le modèle de valeur réelle de la vitesse de rotation, et dont la sortie est reliée à une autre entrée du dispositif de transformation (14) situé côté sortie.

11. Montage pour la mise en oeuvre du procédé suivant la revendication 2, comportant un onduleur (4), qui alimente plusieurs machines à champ tournant (2), les grandeurs de réglage de l'onduleur (4) étant formées à l'aide d'un dispositif (6) de formation de la grandeur de passage du courant comportant une unité asservie (8) de régulation du courant, caractérisé par le fait que le dispositif (6) de formation de la grandeur de passage du courant comporte, côté entrée, un calculateur (10) de la valeur réelle et un premier comparateur (12), une valeur de consigne prédéterminée ($n_{soll}$) de la vitesse de rotation étant appliquée à l'entrée positive du premier comparateur (12) et son entrée négative étant reliée à la sortie d'une unité (16) formant un modèle de la valeur réelle de la vitesse de rotation, qui est relié, côté entrée, à la sortie du calculateur (10) de la valeur réelle, aux entrées duquel sont appliqués les courants de sortie ($i_{Rx}$, $i_{Sx}$, $i_{Tx}$) et les signaux de commutation ($S_R$, $S_S$, $S_T$) des valves de conversion de courant de l'onduleur (4), et qui comporte, côté sortie, un dispositif de transformation (14), qui est relié, côté entrée, d'une part, à un régulateur (22) de la vitesse de rotation, branché en aval du premier comparateur (12), et, d'autre part, à un régulateur de tension (60) branché en aval d'un troisième comparateur (68), l'entrée négative du troisième comparateur (68) étant reliée à une sortie d'un autre dispositif de transformation (70) qui est branché en aval du calculateur (10) de la valeur réelle et l'entrée positive du troisième comparateur (68) étant reliée à un dispositif (66) de formation de la valeur de consigne pour la tension de sortie ($V_w$) de l'onduleur (4), et que la sortie du régulateur (22) de la vitesse de rotation est reliée, d'une part, à l'unité (16) formant le modèle de la valeur réelle de la vitesse de rotation et, d'autre part, à une unité (20) de compensation du glissement, l'unité (20) de compensation du glissement étant reliée, côté entrée, à la sortie du régulateur de tension (60) et, côté sortie, à un circuit additionneur (34), dont la seconde entrée est reliée à la sortie de l'unité (16) formant le modèle de la valeur réelle de la vitesse de rotation et dont la sortie est reliée, d'une part, à une autre entrée du dispositif de transformation (14) situé côté sortie et, d'autre part, à l'entrée du dispositif (66) de formation de la valeur de consigne pour la tension de sortie ($U_w$) de l'onduleur (4).

12. Montage suivant la revendication 11, caractérisé par le fait qu'un interrupteur (58) est branché en aval du régulateur (24) de la composante de courant de telle sorte que sa sortie est connectée, d'une part, au dispositif de transformation (14) situé côté sortie et, d'autre part, à la sortie du régulateur de tension (60), et qu'un autre interrupteur (64) est branché en aval de la sortie de l'additionneur (34) de sorte que sa sortie est reliée au dispositif (18) de formation de la valeur de consigne de la composante de courante représentant le flux, et que son entrée est reliée à l'entrée du dispositif (66) de formation de la valeur de consigne pour la tension de sortie ($U_w$) de l'onduleur.

13. Montage suivant la revendication 10 ou 11, caractérisé par le fait que le calculateur (10) de la valeur réelle est constitué d'une unité (38) de détection de puissance et d'un dispositif (40) de calcul de la valeur réelle.

14. Montage suivant la revendication 10 ou 11, caractérisé par le fait que l'unité (16) formant le modèle de la valeur réelle de la vitesse de consigne comporte un comparateur (26), à l'entrée négative duquel est appliquée une valeur réelle ($i_{qist}$) de la composante de courant représentant le couple, et à l'entrée positive duquel est appliquée une valeur de passage ($i_{qw}$) de la composante de courant représentant le couple, la sortie du comparateur (26) étant connectée à un régulateur à action intégrale (28).

15. Montage suivant la revendication 14, caractérisé par le fait que la sortie du comparateur (26) est reliée à un régulateur à action proportionnelle (30), dont la sortie est connectée, au moyen d'un circuit additionneur (32), à la sortie du régulateur à action intégrale (28).

18

**16.** Montage suivant la revendication 10 ou 11, caractérisé par le fait que le dispositif de transformation (14) situé côté sortie comporte un convertisseur de conversion de coordonnées cartésiennes en coordonnées polaires (46) et un dispositif (48) de formation du système de grandeurs de passage.

**17.** Montage suivant la revendication 10, caractérisé par le fait que le dispositif (28) de formation de la valeur de consigne de la composante de courant représentant le flux est constitué d'un dispositif (50) de formation de la valeur de consigne, qui dépend de la charge, et d'un dispositif (44) de formation de la valeur de consigne, qui est indépendant de la charge, les sorties de ces dispositifs de formation de la valeur de consigne pouvant être reliées, au moyen d'un commutateur (52) en fonction d'une charge, à la sortie du dispositif (18) de formation de la valeur de consigne de la composante de courant représentant le flux.

**18.** Montage suivant la revendication 10 ou 11, caractérisé par le fait qu'il est prévu un dispositif de protection de basculement (54), qui est relié, côté entrée, d'une part, au calculateur (10) de la valeur réelle et, d'autre part, à l'unité (20) de compensation de glissement et, côté sortie, à un circuit (56) de réglage de la valeur de consigne.

**19.** Montage suivant la revendication 11, caractérisé par le fait que l'autre dispositif de transformation (70) est relié, côté entrée, à deux dispositifs d'élévation au carré (80,82), dont les sorties sont combinées aux entrées d'un additionneur (86), dont la sortie est reliée, par l'intermédiaire d'un dispositif de formation de la racine carrée (88), à une première entrée d'un multiplicateur (90), à la seconde entrée duquel est appliquée la valeur de la tension ($U_d$) du circuit intermédiaire, et comporte, côté sortie, un diviseur (84), dont une entrée est reliée à la sortie du multiplicateur (90) et dont l'autre entrée est reliée à un circuit (92) produisant une valeur constante, à l'entrée duquel est appliquée la densité linéique de courant (î) du vecteur ($\underline{i}_S$) du courant statorique, rapporté au stator.

**20.** Montage suivant la revendication 11, caractérisé par le fait qu'en aval du dispositif (66) de formation de la valeur de consigne pour la tension de sortie ($U_w$) de l'onduleur est branché un additionneur (72), dont la sortie est reliée à l'entrée positive du troisième comparateur (68) et dont la seconde entrée est connectée à la sortie d'un circuit (74) de production d'une constante, à l'entrée duquel est appliquée la valeur de passage de la composante de courant ($i_{dw}$) représentant le flux.

**21.** Montage suivant la revendication 11, caractérisé par le fait qu'en aval du dispositif (66) de formation de la valeur de consigne pour la tension de sortie ($U_w$) de l'onduleur est branché un additionneur (72), dont la sortie est reliée à l'entrée positive du troisième comparateur (68) et dont la seconde entrée est reliée à la sortie d'un multiplicateur (76), qu'en amont de la première entrée du multiplicateur (76) est branché un circuit (64) de formation d'une constante, à l'entrée duquel est appliquée la valeur de passage de la composante de courant ($i_{dw}$) représentant le flux, et qu'en amont de la seconde entrée du multiplicateur (76) est branché un diviseur (78), dont la seconde entrée est reliée à la sortie du régulateur de tension (60) et à la première entrée duquel est appliquée une composante de courant de référence ($i_{dRef}$) représentant le flux.

**22.** Montage suivant la revendication 11, caractérisé par le fait qu'il est prévu comme dispositif (66) de formation de la tension de sortie ($U_w$) de l'onduleur, un transmetteur de courbe caractéristique.

FIG 1

EP 0 437 669 B1

FIG 2

EP 0 437 669 B1

FIG 3

EP 0 437 669 B1

FIG 4

FIG 5

FIG 6

FIG 7